(19) Europäisches Patentamt
European Patent Office
Office européen des brevets

(11) EP 4 711 499 A1

(12) EUROPEAN PATENT APPLICATION

(43) Date of publication:
**18.03.2026 Bulletin 2026/12**

(21) Application number: **25202172.0**

(22) Date of filing: **15.09.2025**

(51) International Patent Classification (IPC):
***C25B 1/04*** *(2021.01)* ***C25B 9/19*** *(2021.01)*
***C25B 9/60*** *(2021.01)* ***C25B 9/75*** *(2021.01)*
***C25B 9/77*** *(2021.01)* ***C25B 11/031*** *(2021.01)*
***C25B 11/051*** *(2021.01)* ***C25B 15/08*** *(2006.01)*

(52) Cooperative Patent Classification (CPC):
**C25B 1/04; C25B 9/19; C25B 9/60; C25B 9/75; C25B 9/77; C25B 11/031; C25B 11/051; C25B 15/08**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **13.09.2024 GB 202413545**

(71) Applicants:
- **Services Pétroliers Schlumberger**
**75007 Paris (FR)**
Designated Contracting States:
**FR**
- **Schlumberger Technology B.V.**
**2514 JG The Hague (NL)**
Designated Contracting States:
**AL AT BE BG CH CY CZ DE DK EE ES FI GB GR HR HU IE IS IT LI LT LU LV MC ME MK MT NL NO PL PT RO RS SE SI SK SM TR**

(72) Inventors:
- **CLARKE, Andrew**
**Cambridge, CB3 0EL (GB)**
- **SNOSWELL, David Robert Evan**
**Cambridge, CB3 0EL (GB)**
- **COLBOURNE, Adam**
**Cambridge, CB3 0EL (GB)**

(74) Representative: **Schlumberger Intellectual Property Department**
**Parkstraat 83**
**2514 JG Den Haag (NL)**

# (54) IMPROVEMENT OF GAS EVOLUTION IN ELECTROLYSIS

(57) An electrochemical half-cell operates to form a gas at a solid surface which may be an electrode. The electrolyte liquid contains an additive, which is a high molecular weight flexible linear polymer or a viscoelastic linear surfactant. A flow path through the half-cell is configured to compel flow of liquid through the half-cell to make a succession of changes of direction. The electrolyte liquid is pumped through the half-cell at rate which is sufficient that the additive and flow path configuration put the flowing electrolyte in a state of elastic turbulence which causes bubbles of gas to detach from the surface on which they are formed while they are still small, freeing the surface area for further reaction. The half-cell may be part of an electrolyser making hydrogen and oxygen from water.

EP 4 711 499 A1

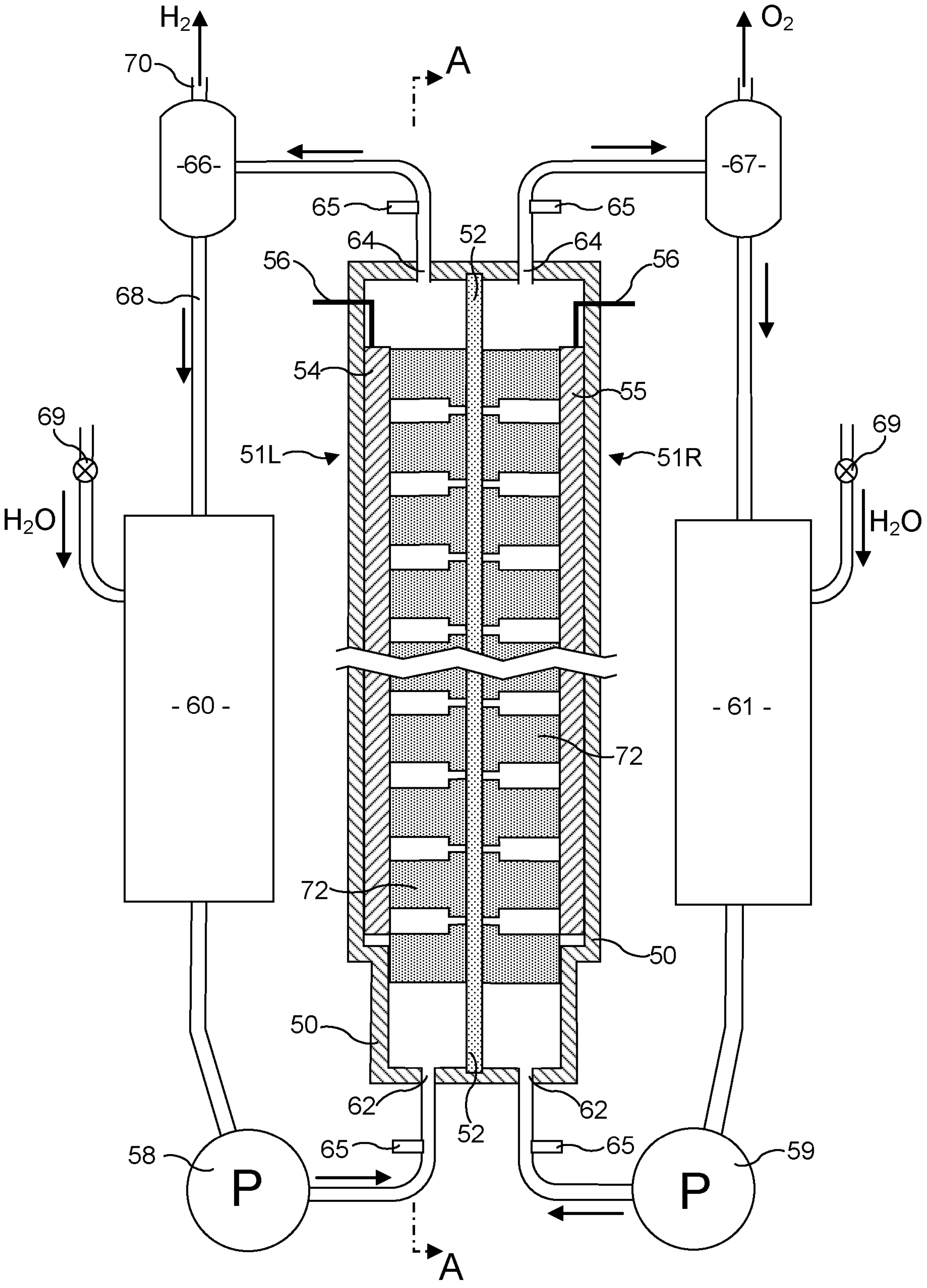
H2
O2
A
70
-66-
-67-
65
64
52
56
68
54
55
51L
51R
69
H2O
- 60 -
- 61 -
72
50
62
58
59
P

Fig 8

## Description

FIELD

This disclosure relates to electrochemical systems in which flow of electric current brings about the formation of a gaseous reaction product. One such system is the electrolytic splitting of water to form hydrogen and oxygen in gaseous form.

BACKGROUND

Electrolytic reaction to form a gaseous product takes place in an electrochemical half-cell. Gases may be formed in both half-cells of an electrochemical cell. An example is the electrolytic splitting of water in which hydrogen gas is formed by electrochemical reaction in one half-cell and oxygen gas is formed by electrochemical reaction in the other half-cell. In a number of designs, the two half-cells are separated by a separator which prevents the mixing of the electrolyte liquids and mixing of hydrogen and oxygen but allows passage of some ions to allow the overall chemical reaction to take place.

There are other electrochemical systems in which gas is produced. One of these is the chlor-alkali process in which one half-cell is supplied with a solution of a chloride salt, usually sodium chloride, and hydrogen is produced by the splitting of water and in the other half-cell chloride ions are converted to chlorine gas and the electrolyte liquid becomes alkaline.

Current density, the ratio of electrical current to electrode area is a significant measure of efficiency of an electrochemical half-cell and electrodes are frequently formed of a porous or otherwise structured material to enhance the surface area available for contact with liquid. However, in a system where there is liquid flow, as the surface area of an electrode is increased within a constant outline size, the permeability of the electrode typically decreases, causing a higher pressure-drop across the electrode and requiring more energy to be consumed for liquid circulation. There has to be a compromise between the conflicting requirements of high surface area and low pressure drop as the fluid flows over or through the electrode.

A considerable body of work exists in the creation of structured carbon electrodes for flowing electrical cells. Commonly applied high-surface area materials include felts, cloths and papers of polymer (synthetic and natural) fibres. These structures are variously woven, precipitated from solution, electro-spun or otherwise made into a porous matrix with a high surface area, before being converted primarily to carbon through "carbonization" in which the majority of non-carbon elements present in an organic material (e.g. H, O and N) are removed, typically at high temperatures under a non-reactive atmosphere.

Designs which use a high surface area porous material can be classified as either "flow through" type in which there is an inlet to the porous material in one place and an outlet from it in another place or "flow-past" type in which the fluid flows across an outer surface of a body of porous material (which may be a thin body) and at least some of the fluid flow diffuses into the porous matrix. A flow-past design may have the advantage of a relatively low resistance to flow, with a largely even distribution of fluid when it is delivered to the porous electrode. However, this comes at the cost of relying on diffusive transport in the direction perpendicular to the channel, and within the porous electrode to facilitate the movement of electroactive species from the channel, to and from the electrode. Electrodes which are entirely flow-through or entirely flow-past represent extremes. There are many flow field designs which are in between.

When gas is formed from liquid in an electrochemical half-cell the gas is initially in solution in the liquid. The liquid becomes supersaturated with the gas and bubbles begin to form on the solid surface where the gas is first formed. Interfacial tension causes the very small bubbles to adhere to the solid surface. Coalescence of adjacent bubbles makes the bubbles grow larger but they remain on the surface until they reach a size at which their buoyancy overcomes the adhesion to the solid surface.

While the bubbles are adhering to the solid surface, they are masking an area of that surface, making this unavailable for the electrochemical reaction. This reduction of the available area reduces the amount of electric current which can flow. The overall current density is reduced. This is a well-known problem with the electrolytic manufacture of hydrogen and oxygen from water, as for instance discussed by Sweigers et al in Sustainable Energy and Fuels vol 5 page 1280 (2021).

Use of a porous material as an electrode or as part of an electrode assembly may exacerbate this issue in that capillary effects (which arise from interfacial tension) in the small channels through a porous material can considerably impede the movement of gas bubbles, so that masking by bubbles and consequent reduction of surface area available for reaction becomes even more significant.

SUMMARY

This summary is provided to introduce concepts that will be further elaborated and described below in the detailed

description. This summary is not intended to be used as an aid in limiting the scope of the claimed subject matter.

The present disclosure uses the phenomenon of elastic turbulence to enhance the release of gas from solid surfaces in a half-cell in which gas is produced by electrochemical reaction.

The present disclosure provides a system comprising an electrochemical half-cell in which (i) an electrolyte liquid is able to undergo electrochemical reaction to form a gas at one or more solid surfaces within the half-cell, (ii) liquid flow paths carry flow of the liquid towards contact with the one or more solid surfaces, and (iii) the system comprises at least one pump for propelling the electrolyte liquid along the flow paths,

wherein the electrolyte liquid is a solution in which a solute enables the liquid to display elastic turbulence, and the liquid flow paths are configured to compel changes in the direction of liquid flow, to cause elastic turbulence within flow of the electrolyte liquid in contact with the solid surface. The present disclosure also provides a process including pumping the electrolyte liquid through the half-cell with the liquid in a condition of elastic turbulence while it is in contact with the one or more solid surfaces.

A solute enabling a liquid to display elastic turbulence may be a linear polymer with a molecular weight of at least $10^6$ Daltons or may be a viscoelastic surfactant which forms worm-like micelles in the liquid. Electrolyte liquids may be aqueous solutions.

A liquid flow path may comprise a porous material whose internal structure compels flow along the flow path to make a succession of changes of direction or may comprise a flow guide which comprises a spaced array of obstructions positioned to compel flow along the flow path to make a succession of changes of direction.

The electrochemical half-cell may be part of an electrolyser converting water to hydrogen in one half-cell and to oxygen in the other half-cell. Either one or both of those half-cells may utilise elastic turbulence as stated above.

In some embodiments the electrode in the first half-cell may comprise an electrically conductive porous layer which is located adjacent to the separator and may carry one or more catalysts for the production and consumption of the gas. Such an electrode may be one component of an electrode assembly which also comprises a metallic carrier for electric current and an electrically conductive second porous layer which is located between the current carrier and the first porous layer.

## BRIEF DESCRIPTION OF THE DRAWINGS

Many of the drawings are diagrammatic and are intended to show the positions of component parts in relation to each other. Thin components such as membranes are shown with exaggerated thickness to make them and their positions more readily seen in these drawings.

Fig 1 is a plot of experimental results showing onset of elastic turbulence.

Fig 2 is a perspective view of a flow guide.

Fig 3 is an enlarged top view of a portion of the flow guide.

Fig 4 is a diagram of apparatus for observing elastic turbulence by means of birefringence.

Fig 5 shows, in greyscale, pictures obtained with the apparatus of Fig 4.

Fig 6 is a slightly enlarged cross section of the flow chamber shown in Fig 4, fitted with electrodes.

Figs 7A and 7B show pictures obtained with the apparatus of Figs 4 and 6.

Fig 8 is a schematic diagram showing component parts of an electrolytic cell and associated equipment for splitting water into hydrogen and oxygen.

Fig 9 is a cross section through part of a flow guide in the direction A-A of Fig 8.

Fig 10 is a similar view to Fig 4, showing pillars with a different cross section.

Fig 11 is a schematic diagram showing component parts of another electrolytic cell.

Fig 12 is a schematic diagram showing components of an electrolytic cell with a zero-gap configuration.

Fig 13 is a schematic diagram of another electrolytic cell and associated equipment for splitting water into hydrogen

and oxygen.

Fig 14 is a schematic diagram showing component parts of another electrolytic cell.

Fig 15 is a schematic diagram showing component parts of a further electrolytic cell.

Fig 16 shows five of the electrolytic cells of Fig 12 connected as a stack.

Fig 17 is a schematic diagram of an electrolytic cell for use in the chlor-alkali process for making chlorine, hydrogen and sodium hydroxide solution.

Fig 18 is a diagrammatic view of apparatus to determine operating parameters for an electrochemical half-cell.

Figs 19 and 20 show experimental results obtained with one example of such apparatus.

## DETAILED DESCRIPTION

This detailed description shows various embodiments of the present disclosure and possibilities which may be used. It should be appreciated that features or possibilities described in combination may, where it is practical to do so, be used separately. Also, features or possibilities described in any embodiment may be used in any other embodiment, in so far as it is possible to do so.

The present disclosure uses the phenomenon of elastic turbulence. It is of course well known that Newtonian liquids such as pure water can undergo either laminar flow or turbulent flow. Such turbulent flow may be referred to as inertial turbulence. Conditions for laminar flow and inertial turbulent flow are often expressed by Reynolds number which is a ratio of inertial to viscous forces within a liquid. Reynolds number has no dimensions because it is a ratio. At Reynolds number above about 2000 there is inertial turbulent flow. At Reynolds number below about 1500, flow of a Newtonian liquid is laminar. Flow paths within porous materials often have small dimensions and rapid flow rates through such materials are not practical, with the consequence that it is not a practical possibility for flows through porous materials to undergo inertial turbulence.

Elastic turbulence is different from inertial turbulence. It is a physical phenomenon discovered at the end of the twentieth century. It has been observed at low flow speeds where Reynolds number is low and a Newtonian liquid would be in a state of laminar flow. Some early observations of elastic turbulence used the older term "elastic instability". However, that term is more general and includes other forms of instability in flow. Literature documents relating to elastic turbulence include a detailed discussion by Steinberg in Annual Review of Fluid Mechanics, vol 53, pages 27-58 (2021).

The phenomenon of elastic turbulence of a liquid requires:

(i) A solute which has elastic properties, enabling the liquid solution to display elastic turbulence,
(ii) A flow path for the liquid which compels a succession of changes in its direction of flow, and
(iii) Pumping the liquid along the flow path at a sufficient velocity.

A succession of changes in direction may be continuous curvature as in concentric or helical flow or may alternate between turning to the right and to the left.

Elastic turbulence occurs in solutions containing a solute which has a flexible structure. One category of material which is able to undergo elastic deformation and enable a solution to display elastic turbulence is a polymer containing long flexible linear chains. The number of monomer units in the polymer may be at least 5000 and may be considerably more such as at least 25,000. The monomer units may be present in linear chains of at least 1000 monomer units which may each be connected one to the next by a single covalent bond, so that one monomer unit can rotate relative to adjoining monomer units. Individual linear chains may be longer and a polymer may contain a linear chain of at least 5000 or even at least 10,000 monomer units. A polymer chain may contain only one kind of monomer or the chain may be a copolymer of more than one monomer, for instance a block copolymer which is linear. A polymer may also include side chains attached to a long chain of monomer units which are connected together by single covalent bonds. If a chain contains units which are themselves an oligomer, as in a block copolymer for instance, the oligomeric units may rotate relative to one another more freely than monomer residues within an oligomeric unit. A polymer may include some chain branching, for instance at branch points where three or more linear chains, each of at least 1000 monomer units, are connected together. When using a long chain polymer to enable elastic turbulence to occur, it is desirable to include a biocide to protect the long chain linear polymer from biodegradation.

The flexibility of the polymer chains enables the polymer molecules to become entangled. The flexibility of polymer chains can be described by means of a mathematical model. The freely jointed chain model is commonly used and

the flexibility of a particular polymer can be indicated by parameters of an equivalent freely jointed chain (itself a mathematical model). A description of this approach is provided by Chapter 2 of "Polymer Physics" by Rubinstein and Colby, 2003, Oxford University Press. An equivalent freely jointed chain has the same mean-square end-to-end distance and the same maximum end-to-end distance as the actual polymer but is considered to consist of so-called Kuhn monomers which are freely rotatable relative to each other. These model monomers have a length, termed the Kuhn length, and a molar mass.

Polymers to enable elastic turbulence may contain at least one flexible polymer chain with length and composition represented by at least 5000 Kuhn monomers having a Kuhn length not more than 100 Angstroms (10nm) and possibly not more than 50 Angstroms. If a polymer is a single unbranched chain, its length and composition may correspond to at least 20,000 Kuhn monomers and possibly at least 50,000 Kuhn monomers.

The mean molecular weight of the polymer may be at least one Mega Dalton i.e. at least $10^6$ Daltons, possibly at least 10 Mega Daltons or more. The concentration of such long chain/high molecular weight polymer included in a solution for enabling elastic turbulence to occur may be under 5% by weight, for instance in a range from 0.05% or 0.1% up to 1% or 2% by weight.

.Elastic turbulence has been observed with several different long chain polymers in solution. One such polymer is polyacrylamide, which may be hydrolysed or partially hydrolysed. Experimental evidence for elastic turbulence in a solution of high molecular weight polyacrylamide was given by Groisman and Steinberg in "Elastic Turbulence in a polymer solution flow" Nature, Vol 45 p53 (2000). Other instances of long chain polymers reported to give rise to elastic turbulence include polyisobutylene of molecular weight 4 to 6 Megadaltons dissolved in an organic solvent (Dris and Shaqfeh, J. Non-Newtonian Fluid Mech. Vol 80 pages 1 to58 (1998)), polystyrene of molecular weight 18 Megadaltons in an organic solvent (Magda and Larson, J. Non-Newtonian Fluid Mech. Vol 30 pages 1-19 (1988)) and polyethylene oxide of molecular weight 4 MegaDaltons in an aqueous solution (Davoodi et al, J. Fluid Mech. Vol 857, pages 823-850 (2018)). Kuhn lengths for polystyrene and polyethylene oxide given by Rubinstein and Colby, page 53 are 18 Angstroms and 11 Angstroms. Kuhn length for polyacrylamides has been reported as 15 to 25 Angstroms (Fetters, Lohse and Colby, "Chain Dimensions and Entanglement Spacings" in Physical Properties of Polymers Handbook; Mark,J.E.,Ed.; Springer: New York, 2007;pages 447-454).

Long chain partially hydrolysed polyacrylamide linear polymers with a molecular weight of more than 1 MegaDalton are available from SNF Floerger, whose headquarters are in Andrézieux, France.

Another category of material able to undergo elastic deformation and enable a solution to display elastic turbulence is a viscoelastic surfactant which forms worm-like micelles in solution. There is extensive scientific literature concerning surfactants which form worm-like micelles, their properties and applications. One review is Yang "Viscoelastic wormlike micelles and their applications" Current Opinion in Colloid & Interface Science vol 7 pages 276_281 (2002). Discussions of properties include Raghavan and Kaler "Highly Viscoelastic Wormlike Micellar Solutions Formed by Cationic Surfactants with Long Unsaturated Tails" Langmuir vol 17, pages 300-306 (2001) and Beaumont et al "Turbulent flows in highly elastic wormlike micelles" Soft Matter vol 9 page 735 (2013). An example, using cetyl trimethyl bromide as the surfactant, is mentioned by Fardin et al "Elastic Turbulence in Shear Banding Wormlike Micelles" Physical Review Letters vol 104 178303 (2010).

When a solution contains a substance able to cause elastic turbulence, the phenomenon of elastic turbulence occurs if the solution is flowing at a sufficient flow velocity (which may be a low velocity) and the path of flow causes the streamlines of the flow to curve. Consequently, one known possibility for a flow path which induces elastic turbulence is a serpentine channel. Another possibility is a flow path with obstructions which compel the stream lines of flow to change direction. Such obstructions may be manufactured and arranged in a pattern so as to compel flow around the obstructions to change direction.

A porous material can also provide a flow path which causes a succession of changes of direction. Changes in the directions of pores and connections between pores can compel changes of flow direction. A porous material may be fibrous and the openings between the fibres will provide flow paths with a succession of changes of direction.

The ability of a fluid composition to display elastic turbulence can be shown experimentally using a laboratory rheometer. In a cone and plate rheometer cell, the onset of elastic instability with application of increasing shear is observed as an apparent increase in viscosity at a particular shear rate associated with an abrupt increase in the noise in the measured torque signal. This has been described by D.O. Olagunju, "Instabilities and bifurcations of von Karman similarity solutions in swirling viscoelastic flow" in Z Angew Math Phys, 46 (1995) 224-238 and also by E. Tran, A. Clarke, "The relaxation time of entangled HPAM solutions in flow", Journal of Non-Newtonian Fluid Mechanics, 311 (2023) 104954.). The apparent increase in viscosity can be seen as a change in the slope (sometimes referred to as an uptick) in the plot of viscosity against shear rate.

Fig 1 shows results from experimental tests carried out with a laboratory rheometer operated to take measurements at increasing steps in shear rate and then at decreasing steps. It is a plot of dynamic viscosity against increasing shear rate for three aqueous solutions containing 0.456wt% sodium chloride, a small percentage of a polymer and a few drops of a biocide consisting of isopropanol and thiourea. In one of these aqueous solutions (points shown as open circles

in Fig 1) the polymer was 0.24wt% of Flopaam 3630 from SNF Floerger which is linear polyacrylamide with a mean molecular weight of 18 to 20 MegaDaltons. In a second of these solutions (points shown as circles containing a cross) the polymer was 0.24wt% xanthan. In the third of these solutions (points shown as filled circles) the polymer was 0.12wt% Flopaam 3060 and 0.12wt% xanthan, i.e. a 1:1 mix. The solutions containing polyacrylamide, either alone or in mixture with xanthan, showed change in slope of the plotted curve, seen at approximately $150s^{-1}$. This indicated the onset of elastic turbulence with increasing shear rate. The solution containing xanthan had no such change of slope, indicating that this more rigid polymer did not enable elastic turbulence to occur.

A similar experiment used a solution containing 0.2wt% of Flopaam 6040, also from SNF Floerger, with of mean molecular weight between 25 and 30 MegaDaltons. Here too the onset of elastic turbulence with increasing shear rate was seen as a change in slope of the plotted curve at approximately $150s^{-1}$ indicating the onset of elastic turbulence. (Shear rates for the onset of elastic turbulence in electrochemical half-cells may be lower).

Figs 2 to 6 relate to experimental demonstrations of elastic turbulence in aqueous solutions of viscoelastic surfactant and also in aqueous solutions of a flexible polymer.

Fig 2 shows a flow guide 10 used in these experiments. It has a regularly spaced array of pillars 12 of square cross section integral with a base 13. Two edges of the array are completed with pillars 14 which have a triangular cross section. Fig 3 is an enlarged top view of a portion of the flow guide. As shown, the pillars 12 each have a square cross section with flat faces 16 meeting at corner edges 17 and 18. The width of a flat face 16 is indicated as "a" in Fig 3 and the spacing between the faces 16 of adjacent pillars is indicated as "b". The width of the gap between two confronting edges 18 is of course given by Pythagoras theorem as $\sqrt{(2b^2)}$. Each pillar 12 is positioned so that the diagonal across the square cross section between corner edges 17 is aligned with the overall direction of flow. As indicated by broken lines, liquid flows through the gaps between confronting edges 18 of adjacent pillars 12, but is then compelled to turn by pillars downstream. Thus the array of pillars 12 obstructs straight line through flow of liquid, causing the streamlines of the flow to change direction repeatedly.

The flow guide 10 is made of transparent polymer and is located within a chamber 20 which is shown in cross section in Fig 4. The chamber 20 is formed by two blocks of transparent polymer, 21, 22 held together by bolts which are not shown. The flow guide 10 is in a cavity between the two blocks. There is a liquid inlet 23 to the cavity and a liquid outlet 24. When liquid is pumped through the chamber 20, the liquid enters the flow guide 10 at the end indicated 15 in Fig 2 and then flows through the gaps between the pillars 12. The repeated changes in direction can cause elastic turbulence to occur, if the liquid contains a substance able to display elastic turbulence and the flow velocity is sufficient.

The occurrence of elastic turbulence was observed using a technique utilizing the phenomenon of birefringence. The apparatus is shown in Fig 4. It has some similarity to apparatus described by Moss GR and Rothstein JP in "Flow of wormlike micelle solutions through a periodic array of cylinders". Journal of Non-Newtonian Fluid Mechanics, Vol 165 pages 1-13, 2410.

Beams from a red LED light 25R and a green LED light 25G are directed along paths, respectively shown as a solid line and as a broken line, towards a video camera 26. The chamber 20 is positioned between linear polarizing filters 28R, 29R set with their polarization directions at right angles (i,e, crossed) and between linear polarizing filters 28G, 29G which are also set with their polarization directions at right angles to each other. Consequently, no light can reach the video camera 26 unless birefringence in the chamber 20 alters the angle of polarization of light as it passes through the chamber. The filters 28R and 28G are set with their polarization directions at right angles to each other, so that the planes of polararisation of the red and green light entering the chamber 16 are at right angles to each other. Dichroic mirrors 30 which pass the red beam and reflect the green beam are used to merge the red and green beams, then to separate them after they have passed through chamber 20, and subsequently to reunite them before they arrive at the camera 26.

Other parts of the apparatus are mirrors 38, lenses 32, red and green bandpass filters 34G and 34R and dichroic mirrors 36 which are set with a 90° difference in rotation with respect to the red beam path in order to cancel rotation of polarization induced due to Fresnel refraction. Such dichroic mirrors were not needed for the green beam because its polarization is such that no rotation of polarization was induced.

Wormlike micelles formed by viscoelastic surfactants are birefringent. Consequently, when these molecules become aligned by liquid flow within the chamber 20 and are illuminated with polarized red and green light, they can change the plane of polarization of the light thereby allowing some of this light to pass through the filters 29R and 29G to the camera, although this does not occur if the alignment of the micelles coincides with the plane of polarization of the light. Providing two light beams with different planes of polarization as they enter the chamber 20 addresses this issue: if micelles happen to be aligned with the red polarization, they will not be aligned with the green polarization and vice versa. Hence the apparatus is sensitive to polarization alignment in any direction.

When there is flow of a liquid containing wormlike micelles through the chamber, these micelles become aligned through extensional flow as the liquid flows around the pillars 12, 14 of the flow guide 10, and the birefringence from the aligned micelles can be seen as red or green colour in pictures or video recorded by the camera 26.

A first experiment was carried out using a solution similar to one mentioned by Moss and Rothstein in the paper above. This solution contained 100mM (approx. 4wt%) of the viscoelastic cationic surfactant cetylpyridinium chloride and 50mM (approx. 0.8wt%) of sodium salicylate dissolved in a brine of 100mM (approx. 0.6 wt%) sodium chloride in distilled

water.

The viscoelastic solution was pumped through the chamber 20 at a low flow rate of 5ml per minute. The camera 26 recorded video at twenty frames per second for a period of 5 seconds and the recording showed that the pattern of flow around the pillars of the flow guide remained constant. Four pictures from that video recording, at half second intervals, are shown in grayscale as the top row in Fig 5 and it can be seen that there is negligible change from one picture to the next. The original coloured pictures showed a line of red colour extending in the flow direction from the downstream corner of each pillar. A white outline has been drawn around one of these indicated 40 in one picture. These lines of red colour remained at the same intensity and in the same position throughout the video recording. The flow rate was then increased to 25 ml/min and video was again recorded for 5 seconds. This video recording of flow at 25ml/min was very different from that at 5ml/min. It showed constant movement. Patches of colour, which is where extensional flow was aligning micelles, were moving from one position to another and varying in intensity. Four pictures from the video with 25ml/min flow rate are reproduced in greyscale as the bottom row of Fig 5. There are a number of changes from each picture to the next. For instance, arrow 41 points to a patch of red colour which was present in one picture but absent from the preceding picture and diminished in the two subsequent pictures. At the position 42 there was an area of red colour which was not present in the preceding picture and again diminished in the next two pictures. The second picture in the lower row also shows an intense green area 43, which was not present in the first picture and which largely disappeared in the third picture. Thus it could be seen that flow at 5 ml/min was laminar but at 25ml/min the flow had become turbulent.

Similar experiments were carried out with a solution containing partially hydrolysed polyacrylamide of average molecular weight 18MDa (HPAM) to enable the display of elastic turbulence and xanthan as an additional thickening agent, and with a comparative solution containing only xanthan (which is too rigid to cause elastic turbulence, as mentioned above). These polymers do not form micelles but do cause birefringence when aligned. Flow rates and observations are given in the following table which also includes the comments from the above experiment with viscoelastic surfactant.

| Solutes | Flow rate | Comments concerning pictures |
|---|---|---|
| 4wt% cetyl pyridinium chloride 0.8wt% sodium salicylate and 0.6wt% sodium chloride | 5ml/min | Red lines extending downstream from pillars do not change position. No changes in overall appearance |
| | 25ml/min | Red lines extending from pillars change angle relative to flow direction and change intensity. Green areas appear, change position and disappear. |
| 0.25wt% HPAM and 0.25wt% xanthan | 5 ml/min | Red lines extending downstream from pillars do not change position. Green areas do not change. |
| | 15 ml/min, and 30ml/min | Movement of red areas extending downstream from pillars, prominent green areas appear and change position |
| 0.5wt% xanthan | 5 ml/min, 30ml/min and 40ml/min | Red and green areas do not change position at any flow rate |
| 0.25wt% xanthan | 30ml/min | Red and green areas do not change position |
| 0. 12wt% HPAM, 0. 12wt% xanthan, and 0.465wt% NaCl | 5 ml/min | Red and green areas do not change position |
| | 45ml/min | Red and green areas change in shape and position |

It is apparent from these comments that the solution containing HPAM and xanthan displayed elastic turbulence at 15ml.sec and above, but solutions containing xanthan without HPAM did not display elastic turbulence even at 30ml/min.

A further experiment demonstrated that elastic turbulence released bubbles from an electrode. As shown in Fig 6, the chamber 20 was provided with a platinum wire electrode 45 projecting into space between two of the pillars of the flow guide and a small copper block 46 as a second electrode at the surface of the upper block 21. Electrical connection to the copper block 46 is indicated at 47. A power supply of about 2 volts was connected to the electrodes, with copper block 46 positive and wire 45 negative.

A solution containing 0.12wt% HPAM of mean molecular weight 18MDa, 0.12wt% xanthan and 0.456wt% sodium chloride was pumped through the flow guide 10 and the flow was observed using the apparatus as shown in Fig 4. When the power supply was switched on, bubbles were seen in the flow downstream from the platinum wire electrode. The bubbles could be seen in the flow because they refract light out of the light path and so appear dark.

Fig 7A is a picture of flow when the flow rate was 5ml/min at which there is no elastic turbulence and Fig 7B is a picture of flow when the flow rate was 45ml/min at which elastic turbulence is present. The pictures were processed to show

the bubbles in contrast with the remainder of the picture and squares have been drawn to show the edges of some pillars more clearly.

The diameters of the bubbles were estimated visually by comparison with the dimensions across and between the pillars. When the flow rate was 5ml/min, which was too low to cause elastic turbulence, the bubbles had diameters in a range from approximately 0.2 to 0.5mm but when the flow rate was increased to 45ml/min at which elastic turbulence is present, the bubbles were clearly smaller and had diameters in a range from approximately 0.03 to 0.2mm, showing that the elastic turbulence was dislodging the bubbles from the platinum wire electrode 45 before they had grown to the size at which bubbles left the electrode in the absence of elastic turbulence.

The present disclosure applies the phenomenon of elastic turbulence to electrochemical half-cells used to produce a gas. One possibility is that elastic turbulence is used in one or both of the paired half-cells in an electrolyser used to split water into hydrogen and oxygen. Various possibilities for electrochemical cells are set out in the following description with reference to Figs 8 onwards. It is common practice to assemble a considerable number of electrochemical cells one next to another in a so-called stack. For the purpose of explanation Figs 8 to 15 show single cells consisting of two half-cells. However, cells such as those shown may, within the scope of this disclosure, be assembled together as a stack.

In some embodiments a flow path which is in contact with an electrode and in which elastic turbulence occurs is formed by pores within a porous material or by the openings between fibres in a fibrous material. Such a flow path will incorporate changes of direction which will cause the flow streamlines to turn, possibly turn abruptly, and thereby will enable elastic turbulence to occur within that porous or fibrous material.

A development, which may be used in some embodiments of this disclosure, is to use a novel geometry which induces elastic turbulence but gives less resistance to flow. The structure of the half-cell defines a flow channel through or near to a half-cell's solid component at which gas bubbles are formed. An array of obstructions in this flow channel cause the stream lines of the flowing liquid to repeatedly change direction. This may create elastic turbulence with less resistance to flow than passage through a porous or fibrous material and so allow a reduction in the energy needed to pump the liquid through the half-cell. In such embodiments the viscosity of the liquid, the flow rate of the liquid and the width of the gaps between obstructions may give a Reynolds number for the flow which is in a range from 1 to 1000 and possibly not more than 500 or 250.

Adding a polymer or surfactant to a liquid so that the liquid can display elastic turbuence will increase the viscosity of the solution, although the increase may be small. That increase in viscosity will call for an increase in energy needed to pump the liquid through the half-cell, but this may be more than offset by improved current density and so give an improved ratio between the amount of gas produced and the electrical power consumed.

The onset of elastic turbulence within an electrochemical cell as flow rate is increased may be inferred from the electric current flowing into the electrochemical cell. The onset of elastic turbulence may also be observed as a change in the pressure drop between inlet and outlet of the flow path. It has also been reported that elastic turbulence can be observed directly if the path of flow is visible through a window and small particles are suspended in the liquid which is flowing, see Qin et al. Physical Review Liquids vol 2 item 083302 (2017) and Groisman and Steinberg, New Journal of Physics vol 6 page 29 (2009).

Figs 7 to 15 show various forms of electrochemical cells for the production of hydrogen and oxygen. Such cells have been developed over a period of years and several different types exist. Because the present disclosure is concerned with the use of elastic turbulence to enhance the efficiency of movements within electrochemical cells, in particular the release of bubbles from surfaces, the extensive literature concerning materials for membranes, porous layers and catalysts has not been discussed here. Published literature concerning materials for porous layers, electrodes and catalysts for producing and consuming hydrogen and oxygen includes Chen et al, "Key Components and Design Strategy for a Proton Exchange Membrane Water Electrolyzer" Small Structures vol4, 2200130 (2023) and Niblett et al, " Review of next generation hydrogen production from offshore wind using water electrolysis" Journal of Power Sources 592 233904 (2024).

Fig 8 shows a cell of the so-called alkaline water electrolysis (AWE) type. It has an outer enclosure 50 within which it is divided into two half-cells by a porous separator 52 which may be an ion exchange membrane. The half-cell 51L to the left of the separator 52 has a negative electrode 54. The half-cell 51R to the right has a positive electrode 55. Electrical connections to these electrodes are indicated at 16. Each half-cell has a bottom inlet 62 and a top outlet 64. Pressure sensors 65 are fitted near each inlet 62 and outlet 64.

A pump 58 draws electrolyte liquid from a storage vessel 20 and pumps the electrolyte liquid into the inlet 62 of the half-cell at the left. Hydrogen is produced at the electrode 54 and a mixture of electrolyte liquid and hydrogen gas leaves the enclosure 50 at outlet 24 from where it flows to a gas/liquid separator 66. Electrolyte liquid is returned along pipe 68 to the vessel 60 while hydrogen gas leaves from a top outlet 70 of the gas/liquid separator 66. The half-cell 51R to the right of the separator 52 has a similar layout and connections. It is supplied with electrolyte liquid from vessel 61 by pump 59. It has a positive electrode 55 and a mixture of electrolyte liquid and oxygen gas flows from outlet 64 of the half-cell to gas/liquid separator 67. Additional water, which may be deionised water, is periodically added to each vessel 60, 61 through valves 69 as required to replace water which has been converted to hydrogen and oxygen.

The electrolyte liquid in both half-cells is a strongly alkaline solution., such as 6N potassium hydroxide. The reaction at the negative electrode is

$$2H_2O + 2e^- \rightarrow H_2 + 2OH^-$$

The reaction at the positive electrode is

$$2OH^- \longrightarrow H_2O + ½O_2 + 2e^-$$

There is a flow of hydroxyl ions from the left half-cell through the separator 52 to the right half-cell.

In order to provide elastic turbulence in accordance with the present disclosure, each half-cell contains a flow guide 72 which is similar to the flow guide shown in Fig 2 in that it has an array of spaced pillars 12 of square cross section integral with a base. However, this flow guide 72 has a longer and wider array of pillars 12 than are shown in Fig 2. Fig 9 shows a portion of this flow guide 72 as a cross section on the line A-A of Fig 8. As shown by Fig 9 the base of the flow guide 72 has holes 73 through it at positions between pillars 12 to allow passage of the ions which pass through the separator membrane 52. The flow guides 72 may be made of electrically non-conductive material.

Other shapes of flow guide, and more specifically other shapes of pillars can be used. This is illustrated by Fig 10 which shows pillars 74 with another possible cross section. The surfaces 76 have convex curvature and intersect concave surfaces 77 at edges 78. Electrolyte liquid flows through the gaps between edges 78 as shown by the broken lines and is compelled by the arrangement of pillars 74 to change direction at every gap between edges 78.

Referring again to Fig 8, pumping power and speed of the pumps 58, 59 is chosen to propel the electrolyte liquids at flow speeds at which flow entering each half-cell at its inlet 62 is laminar. However, as the electrolyte liquids pass through the flow guides 72 in the half-cells, the pillars 12 cause the streamlines of the flow to change direction many times and thereby initiate and maintain elastic turbulence. This elastic turbulence causes gas bubbles to detach from the electrode surfaces before they grow to the size at which buoyancy would detach them, thus keeping more of the electrode surfaces available for electrochemical reaction and thereby enhancing efficiency.

Fig 11 shows an electrochemical cell which is constructed similarly to the cell shown in Fig 8 except that the flow guides 72 are replaced by pads of porous material 79 filling the gaps between the electrodes 54, 55 and the separator 52. Each pad 79 provides a network of small interconnected channels for flow through it. The porous pads 79 may for example be made from a non-woven fibrous material. The electrochemical cell is connected to pumps, supply tanks and gas/liquid separators in the same way as the cell of Fig 8. Electrolyte liquids supplied to the inlets 62 of the half-cells contain a long chain polymer or a surfactant which forms worm like micelles. As electrolyte liquid is pumped through the interconnected channels, their shapes and connections between channels cause the flow of liquid to make a succession of changes of direction. With a sufficient flow rate, the flows of electrolyte liquid display elastic turbulence within the pads 79 and in contact with the electrodes 54, 55 thereby enhancing the release of gas bubbles from the surfaces of the electrodes.

Fig 12 shows an electrochemical cell of the so-called zero-gap type which can be used for alkaline water electrolysis. Electrodes 54, 55 are porous. For example, they may be made from a metal mesh or made as mats of fibrous material onto which a metallic coating is deposited. These electrodes are positioned directly adjacent the separator 52. Flow guides 72 with the shape shown by Fig 8 (but without through holes 73) and made of an electrically non-conductive material are positioned between the electrodes 54, 55 and the outer enclosure 50. As with the embodiments described above, this electrochemical cell is connected to pumps, supply tanks and gas/liquid separators in the same way as the cell of Fig 8. Electrolyte liquids supplied to the inlets 62 of the half-cells contain a polymer or a surfactant which is able to cause elastic turbulence of the flowing electrolytes. The electrolyte liquids are pumped with sufficient velocity to induce elastic turbulence in the flow guides 72. This is also present in the porous electrodes 54, 55 because their pores compel flowing liquid to make repeated changes of direction and/or because elastic turbulence in the flow guides 72 extends into the adjacent electrodes 54, 55. The elastic turbulence enhances release of gas bubbles from within the porous electrodes 54, 55.

In the electrochemical cell of Fig 13, both half-cells have an electrode assembly consisting of a conductive current carrier 86, 87 which may be a metal sheet or grid and porous layers which are also electrically conductive. These porous layers may for example be made of a carbon felt. In the half-cell 81L the porous layer 82 which is positioned next to the separator membrane 52 has a catalyst for the formation of hydrogen deposited on it. The porous layer 83 in the half-cell 82R has a catalyst for the formation of oxygen deposited on it. Between these layers 82, 83 and the current carriers 86 are further porous layers 84 85 through which flow electrolyte liquid and the gas bubbles detached from the surfaces within layers 82, 83. Electrical connections to the current carriers 86, 87 are indicated 56.

The two half-cells are connected to supply vessels 60, 61 for electrolyte liquid, pumps 58, 59 to direct flows of liquid through the half-cells and gas/liquid separators 66, 67 in similar manner to that shown in Fig 8, so that electrolyte liquids are pumped from the vessels 60, 61 into the half-cells and mixtures of liquid and gas leave through the outlets 64 and are carried to the gas/liquid separators 66, 67, from which liquid is returned to the supply vessels 60, 61.

In accordance with the present disclosure the electrolyte liquids contain polymer or surfactant able to cause the liquid to display elastic turbulence and the liquids are pumped with sufficient speed to induce such turbulence. The turbulence will be present in the layers 84, 85 and will also be present in the adjacent catalyst layers 82, 83 because the porous structure of these layers causes the flow within them to make repeated changes of direction and/or because turbulence in the layers 84, 85 extends into the adjacent layers 82, 83.

Fig 14 shows an electrochemical cell which is a variation on the arrangement shown in Fig 13. The current carriers 86, 87 and porous layers 84, 85 are replaced with electrically conductive flow guides 89 which have with an array of pillars similarly to flow guides 72 shown in Figs 8 and 12. These flow guides 89 are either made of metal or have a metallic surface coating and are positioned so that the tops of the pillars are adjacent to the catalyst layers 82, 83. When electrolyte liquids are pumped through the half-cells, elastic turbulence will occur within the flow guides 89 and will also extend into the adjacent catalyst layers 82, 83 so enhancing the release of gas bubbles from surfaces within these catalyst layers 82, 83.

Fig 15 shows a further configuration in which hydrogen and oxygen are formed. Porous electrodes 94, 95 which may for example be formed of metal mesh or a fibrous mat with metallic coating are positioned adjacent to the separator membrane 52. Next to these electrodes are porous catalyst layers 82, 83 supporting reaction catalysts. Flow guides 72 similar to those in Figs 8 and 12 and formed of electrically non-conductive material are positioned between the catalyst layers 82, 83 and the outer enclosure 50. In operation, when electrolyte liquids are pumped through the half-cells, elastic turbulence will occur within the flow guides 72 and will also extend into the adjacent catalyst layers 82, 83 so enhancing the release of gas bubbles from surfaces within these layers 82, 83.

As mentioned above, the embodiments shown in Figs 13 to 15 are suitable for systems in which hydrogen and oxygen are formed at the catalyst layers 62, 63. One known electrochemical system which can be operated with this configuration is that currently used in proton-exchange-membrane (PEM) electrolysers. For this system the membrane 52 allows passage of hydrogen ions. The electrolyte liquids are strongly acidic. The overall reaction at the positive (i.e. anode) side is:

$$H_2O \longrightarrow 2H^+ + \tfrac{1}{2}O_2 + 2e^-$$

and the overall reaction at the negative (i.e cathode) side is

$$2H^+ + 2e- \rightarrow H_2$$

These overall reactions proceed as several steps with the formation of reactive intermediates on the catalyst surface.

Another chemical system, which can use the same constructional arrangement, is that of an alkaline-exchange-membrane (AEM) electrolyser. In this system the electrolyte liquids may be mildly alkaline and the membrane allows the passage of hydroxyl ions. The overall reactions in the two half-cells are the same as in the alkaline system mentioned above for Fig 8, but the reaction mechanisms rely on the presence of catalyst and the gas bubbles form at the catalyst layers.

To simplify explanation, Figs 8 to 15 have shown single electrochemical cells consisting of two half-cells. For the commercial production of hydrogen by electrolysis, it is common to assemble a plurality of identical cells in a so-called stack. This is illustrated by Fig 16 which shows five cells of the type shown in Fig 14 arranged side by side. In this embodiment, the half-cells which produce hydrogen are supplied with electrolyte liquid by a single pump 58 from a single vessel 60 and the liquid and gas mixture from these half-cells is taken to a single gas /liquid separator 66. Similarly, the half-cells which produce oxygen share a single supply of electrolyte liquid and a single gas/liquid separator 67. The electrically conductive flow guides in the half-cells producing oxygen may be electrically connected together and the conductive flow guides in the half-cells producing hydrogen may likewise be electrically connected together, so that the cells are electrically in parallel. However, series connections of cells are also possible. The electrical connections to the conductive flow guides 89 are not shown in Fig 16.

In the various embodiments mentioned above, the electrolyte liquids in both half-cells contain a solute which is either a high molecular weight polymer which is flexible or a surfactant which forms worm like micelles and in either case enables elastic turbulence to occur. However, it is possible that elastic turbulence might be used in one half-cell but not the other and so such a solute might be present in one half-cell but not the other, for instance if masking of the surface at which gas bubbles form is a more severe problem in one half-cell than in the other.

Fig 17 illustrates an electrochemical cell in which elastic turbulence is used in the production of chlorine by the chlor-alkali process and elastic turbulence is used in one half-cell but not the other. The separator between the two half-cells separated by an ion exchange membrane The half-cell at the right 98R contains an electrode of the type well established in the industry and termed a "dimensionally stable anode". It is a titanium mesh coated with a mixture of ruthenium dioxide and titanium dioxide. A flow guide 72 of the type shown in Fig 12 is positioned with its pillars adjacent to the electrode 108. A thin porous spacer layer 106 may be positioned between the electrode 108 and the separator membrane 52.

A concentrated aqueous solution of sodium chloride is supplied to the half-cell 98R along inlet pipe 101. This solution contains a viscoelastic surfactant enabling it to display elastic turbulence and the flow rate through the pipe 101 is such that flow along the pipe 101 is laminar but the changes in direction of flow within the guide 72 initiate and maintain elastic turbulence in the flow which is in contact with the electrode 108. Chlorine gas is formed at the electrode and is separated from the liquid flow at the separator 67. The liquid is returned along pipe105 to the process plant for brine supply. The ion exchange membrane separates the electrolyte liquids but allows sodium ions to pass through it into the half-cell 98L.

The half-cell 98L has the same internal components as the half-cell 81L of Fig 13. It is supplied with water as electrolyte liquid along pipe 100. This water flow becomes a solution of sodium hydroxide because it receives sodium ions through the membrane 52 and water is split at the catalyst layer 82 to form hydrogen.

Because sodium hydroxide solution is a useful product of the process, no additive is mixed with the water which is the electrolyte liquid supplied to half-cell 98L and elastic turbulence does not take place in the half-cell 98L.

For electrochemical half-cells as described above, with a polymer or surfactant present in a electrolyte liquid, a flow rate able to cause elastic turbulence to occur may be found by monitoring electric current while progressively increasing the flow rate. When elastic turbulence begins the improved release of gasses from surfaces will be apparent as an increase in the flow of electric current.

However, it is also possible to determine a suitable flow rate without operation of a half-cell. This is illustrated by Figs 18 to 20. As shown in Fig 18, a structure 120 with the dimensions of a proposed half-cell contains a proposed flow guide 72 of the type shown in Figs 12 and 15. This is the same as the flow guide of Fig 8 except that it does not have the through holes 73. No separator or membrane is present. Instead, a plate 122 is fitted against the tops of the pillars 12 of the flow guide 72. Pressure sensors 124, 125 are fitted at the inlet and outlet regions of the structure 120. The inlet 126 is connected to a pump 130 which delivers fluid from a tank 132 which is maintained at a fixed temperature. This fluid should be the same as the fluid which will flow through the half-cell. The outlet 128 is connected to a graduated vessel 134 for measuring volume of liquid which has been pumped through the flow guide 72 in a chosen interval of time, and thereby determining the flow rate.

When liquid from the tank 132 is pumped through the structure 120 containing flow guide 72 there will be a pressure drop between the inlet pressure sensor 124 and the outlet pressure sensor 125. When the flow rate is very low, the flow will be laminar, without any elastic turbulence. The minimum flow rate to cause elastic turbulence in the half-cell can be found by progressively increasing the pump speed to increase the flow rate and plotting the pump speed, which increases with pressure drop, against flow rate. This plot will show a change in slope on reaching the flow rate at which elastic turbulence begins.

This is illustrated by the following description of experimental work with apparatus similar to that shown. The results of the experiments are shown in Figs 19 and 20. An initial calibration determined relationships between pump speed and flow rate. The tank 132 was filled with water. The pump 130 was used to propel water through the structure 120 containing flow guide 72 at progressively increasing flow rate. The pump speeds and the flow rates measured downstream of the structure 120 were recorded and are shown in Fig 19 (triangle points). This calibration procedure was then repeated with an aqueous solution containing 0.1 wt% of Flopaam 3630 polyacrylamide dissolved in the liquid in the tank 132. This gave the non-linear plot also shown in Fig 19 (circular points).

Fig 20 shows the measured flow rate plotted against pump speed. With water the plot was approximately linear (as would be expected because water is a Newtonian fluid) but with the polyacrylamide solution there was a very sharp change in the slope of the plot at the point E, indicating that the flow rate at this point was the minimum required to cause elastic turbulence with that polyacrylamide solution and apparatus.

Measurements of this kind make it possible to estimate Reynolds number for flow through a flow guide 72. The formula which may be used to determine Reynolds number (Re) for flow through a chamber containing obstructions so as to compel the flow streamlines to bend is:

$$Re = \frac{\rho U L}{\eta}$$

where $\rho$ is density of the fluid in Kg per cubic metre,
$U$ is the flow velocity in metres per second,
$L$ is the width of the gaps between the obstructions in the chamber, and
$\eta$ is the viscosity of the fluid in Pascal.sec.

If the flow rate is measured as volume in unit time, the formula above becomes

$$Re = \frac{\rho Q L}{\eta A}$$

where *Q* is the flow rate in cubic metres per second and *A* is the cross sectional area, transverse to the overall direction of flow, through which the flow passes.

In an example of the flow guide shown in Figs 7, 12 and 15, the flat faces 12 of the pillars had a width "a" of 4mm and the height of the pillars was 7mm. The spacing "b" between the faces 16 of adjacent pillars was 2mm and so the gaps between adjacent edges 18 was √8 = 2.83mm. A full line of pillars transverse to the overall direction of flow contained 12 pillars with 11 gaps between edges 44, and so the cross section available for flow was

$$11 \text{ x } 7 \text{ x}2.83\text{mm}^2 = 11 \text{ x } 7.10^{-3} \text{ x } 2.83.10^{-3} \text{ m}^2.$$

Flow rate was measured as 75 ml.sec$^{-1}$ = 7.5 x 10$^{-5}$ m$^3$sec$^{-1}$. Density of the fluid was 1000kg/m$^3$; viscosity was 0.008Pa.sec. Putting these numbers into the formula mentioned above

$$Re = \frac{\rho Q L}{\eta A} = \frac{1000 \, x \, 7.5.10^{-5} \, x \, 2.83.10^{-3}}{8.10^{-3} \, x \, 11 \, x \, 7.10^{-3} \, x \, 2.83.10^{-3}}$$

which is Re = 12.17

In embodiments of this disclosure where a flow guide is used, the rate of flow through the flow guide may be such that the Reynolds number is at least 1 or 2 but not more than 250. These are Reynolds numbers at which a Newtonian liquid with no additive to enable elastic turbulence would be in a state of laminar flow.

Various embodiments of this disclosure have been set out above. These are intended to assist understanding of this disclosure, but not to limit it in any way. It should be appreciated that any features or possibilities described in combination may, where it is practical to do so, be used individually. Also, features or possibilities mentioned in the following claims or described in any embodiment may be used in any other embodiment, in so far as it is practical to do so and where two or more of the following claims are dependent on the same preceding claim, the reader should understand that the present disclosure includes any possible combination of any two or more or all of those dependent claims with each other and also with that preceding claim.

## Claims

**1.** A system comprising an electrochemical half-cell which comprises:

a liquid able to undergo electrochemical reaction to form a gas at one or more solid surfaces within the half-cell;
structure defining liquid flow paths to carry flow of the liquid towards contact with the one or more solid surfaces, and
at least one pump for propelling the liquid along the flow paths, wherein:

the liquid is a solution containing a solute enabling the liquid to display elastic turbulence, and
the flow paths are configured to compel changes in the direction of liquid flow, to cause elastic turbulence within flow of the liquid in contact with the one or more solid surfaces where gas is formed.

**2.** The system of claim 1 wherein the one or more solid surfaces are part of a porous layer and liquid flow paths extend through the porous layer and/or wherein the one or more solid surfaces are on an electrode connected to a supply of electric current and/or wherein the one or more solid surfaces have reaction catalyst thereon.

**3.** The system of claim 1 wherein the structure defining liquid flow paths is formed of solid material and comprises obstructions which compel changes in the direction of liquid flow.

**4.** The system of any one of the preceding claims wherein the solute which enables the liquid to display elastic turbulence is a polymer containing at least 5,000 monomer units in one or more linear polymer chains each containing at least 1,000 monomer units, connected one to the next by a single covalent bond so that one monomer unit can rotate relative to adjoining monomer units or wherein the solute which enables the liquid to display elastic turbulence is a viscoelastic surfactant which forms wormlike micelles.

**5.** The system of claim 4 wherein the polymer is a polyacrylamide or hydrolysed polyacrylamide.

**6.** An electrolyser for production of hydrogen and oxygen from water by electrochemical reaction comprising a half-cell as defined in any preceding claim wherein electrochemical reaction in the half-cell converts hydroxyl ions to oxygen.

**7.** An electrolyser according to claim 6 which is a proton exchange membrane (PEM) electrolyser comprising one or more pairs of half-cells in which the liquids are aqueous solutions and acidic, each pair of half-cells having a proton exchange membrane between them, inhibiting flow of gas between the half-cells while allowing passage of hydrogen ions through the membrane from one half-cell to the other.

**8.** An electrolyser according to claim 6 comprising one or more pairs of half-cells in which the liquids are aqueous solutions and alkaline, each pair of half-cells having a separator between them, inhibiting flow of gas between the half-cells while allowing passage of hydroxyl ions through the separator from one half-cell to the other.

**9.** A process for production of gas from an aqueous solution by reaction at one or more solid surfaces, the process comprising:

flowing an aqueous liquid through an electrochemical half-cell which comprises one or more solid surfaces and liquid flow paths leading to contact with the one or more solid surfaces, the liquid containing a dissolved constituent able to undergo electrochemical reaction to form a gas at the one or more solid surfaces, and
applying electrical potential to the half-cell and thereby causing the formation of gas bubbles at the one or more solid surfaces, wherein:

the liquid contains a solute enabling the liquid to display elastic turbulence,
the flow paths leading to contact with the one or more solid surfaces cause changes in the direction of flow of the liquid, and
the process comprises pumping the liquid along the flow paths so that the liquid is in a state of elastic turbulence while it is in contact with the one or more solid surfaces where gas is formed.

**10.** The process of claim 9 wherein the one or more solid surfaces are surfaces on porous material and the flow paths extend through the porous material.

**11.** The process of claim 9 or claim 10 wherein the solute which enables the liquid to display elastic turbulence has a molecular weight of at least $10^6$ Daltons and contains at least 5,000 monomer units in one or more linear polymer chains each containing at least 1,000 monomer units, connected one to the next by a single covalent bond so that one monomer unit can rotate relative to adjoining monomer units or wherein the solute which enables the liquid to display elastic turbulence is a viscoelastic surfactant which forms wormlike micelles.

**12.** A process for the production of hydrogen and oxygen by electrolysis of aqueous liquids in first and second electrochemical half-cells with a separator between them inhibiting the mixing of gases formed in the half-cells, wherein each half-cell comprises one or more solid surfaces and liquid flow paths leading to contact with the one or more solid surfaces,

the process comprising flowing a first aqueous solution along the flow path of the first electrochemical half-cell, the solution containing a dissolved constituent able to undergo electrochemical reaction to form oxygen at the one or more solid surfaces of the first half-cell,
flowing a second aqueous solution along the flow path of the second electrochemical half-cell, the second solution containing a dissolved constituent able to undergo electrochemical reaction to form hydrogen at the one or more solid surfaces, of the second half-cell and
applying electrical potentials to the half-cells and thereby causing the formation of oxygen and hydrogen at the one or more solid surfaces of the first and second half-cells respectively,
wherein, for at least one of the half-cells,
the liquid contains a solute enabling the liquid to display elastic turbulence,
the flow path in contact with the one or more solid surfaces causes changes in the direction of flow of the liquid, and
the process comprises pumping the liquid along the flow paths with the liquid being in a condition of elastic turbulence while it is in contact with the one or more solid surfaces.

**13.** The process of claim 12 wherein the one or more solid surfaces comprises a porous material and the flow paths extend

through the porous material.

**14.** The process of claim 12 or claim 13 wherein the solute which enables the liquid to display elastic turbulence has a molecular weight of at least $10^6$ Daltons and contains at least 5,000 monomer units in one or more linear polymer chains each containing at least 1,000 monomer units, connected one to the next by a single covalent bond so that one monomer unit can rotate relative to adjoining monomer units or wherein the solute which enables the liquid to display elastic turbulence is a viscoelastic surfactant which forms wormlike micelles.

**15.** The process of any of claims 12 to 14 wherein:

the liquid of the first half-cell, in which oxygen is formed, contains a solute enabling the liquid to display elastic turbulence,
the flow path in contact with the one or more solid surfaces of the first half-cell causes changes in the direction of flow of the liquid, and
the process comprises pumping the liquid along the flow paths into contact with the one or more solid surfaces of the first half-cell with the liquid in a condition of elastic turbulence while it is in contact with the one or more solid surfaces of the first half-cell.

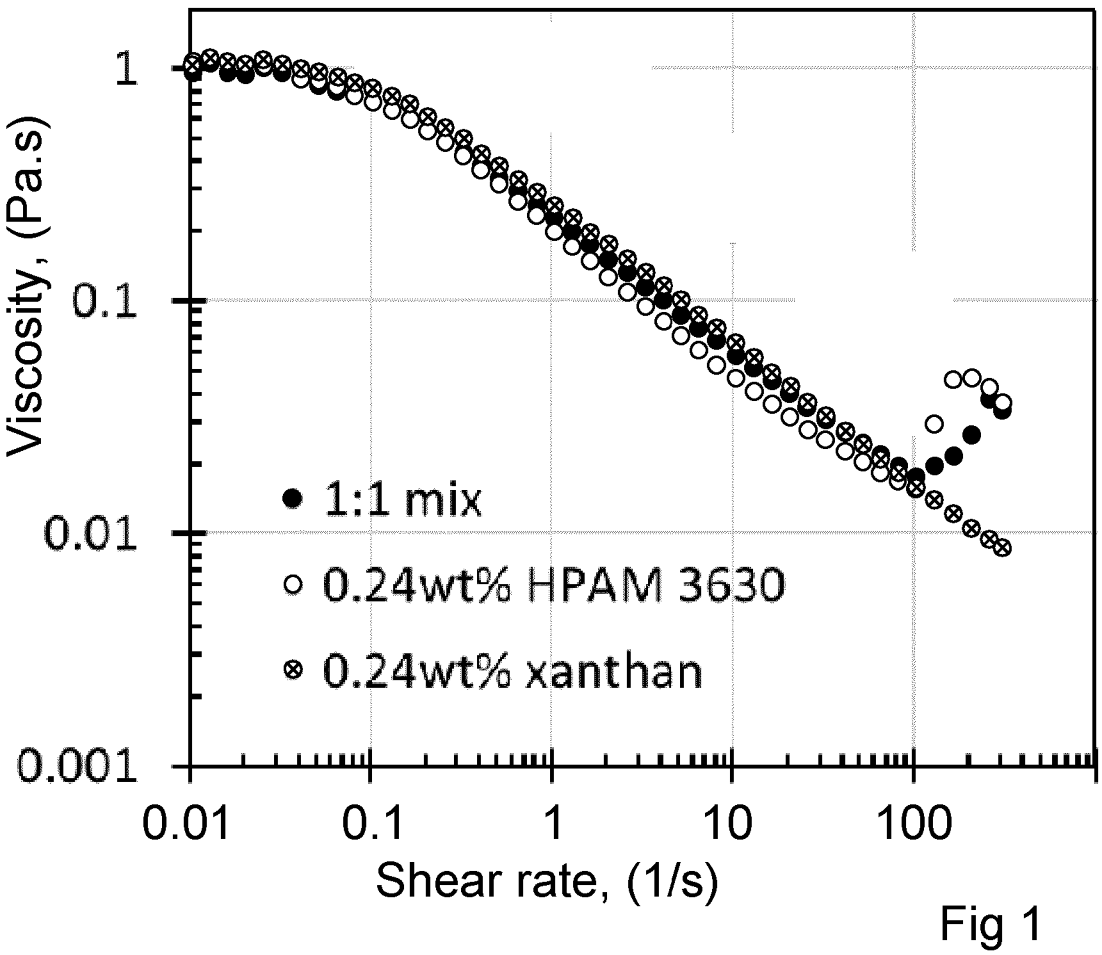
1
0.1
0.01
0.001
Viscosity, (Pa.s)
1:1 mix
0.24wt% HPAM 3630
0.24wt% xanthan
0.01
0.1
1
10
100
Shear rate, (1/s)

Fig 1

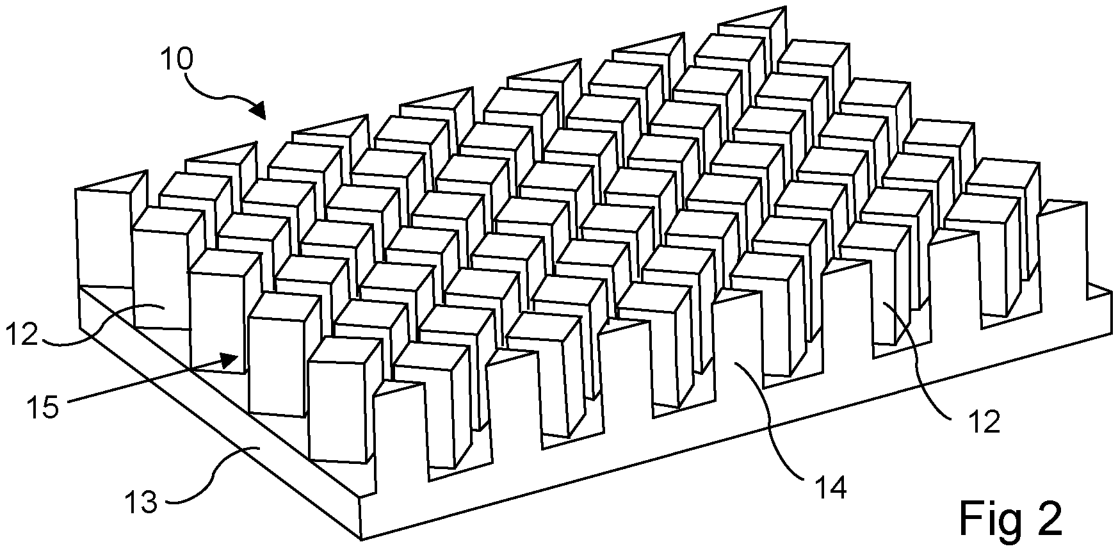
10
12
15
13
14
12

Fig 2

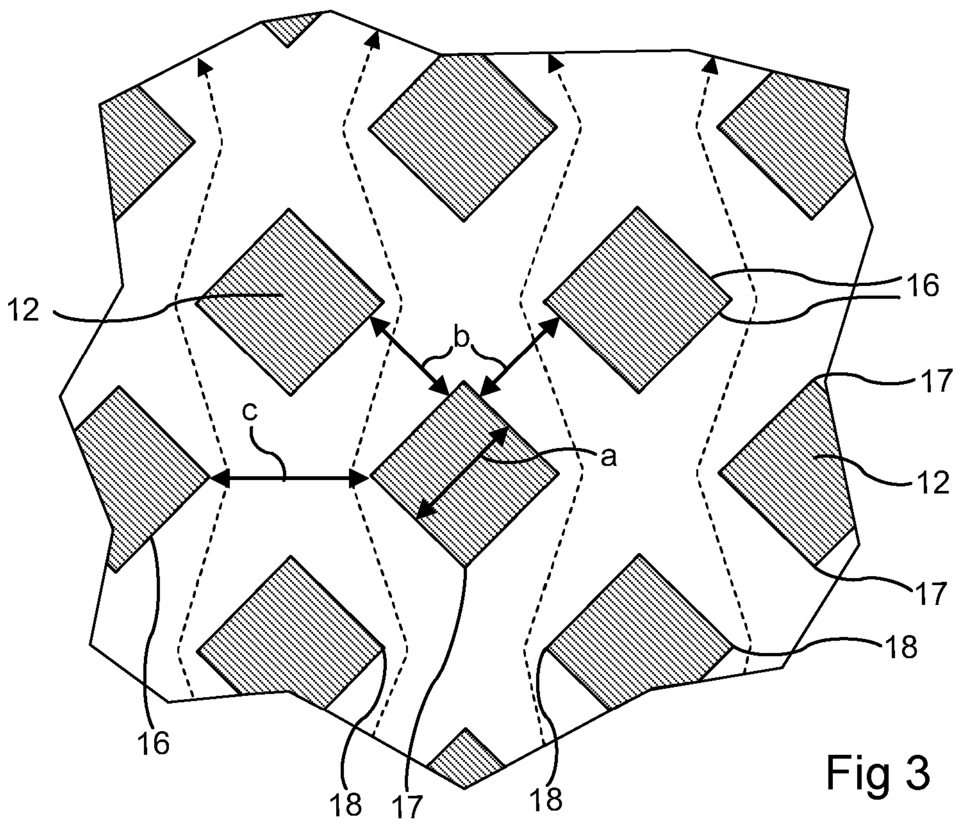


Fig 3

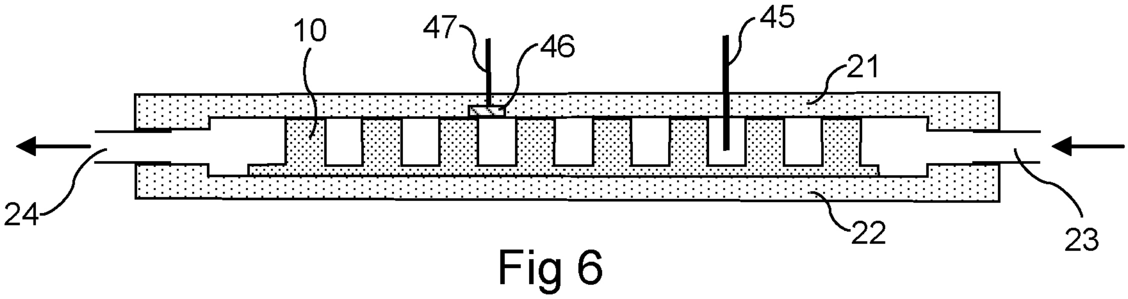


Fig 6

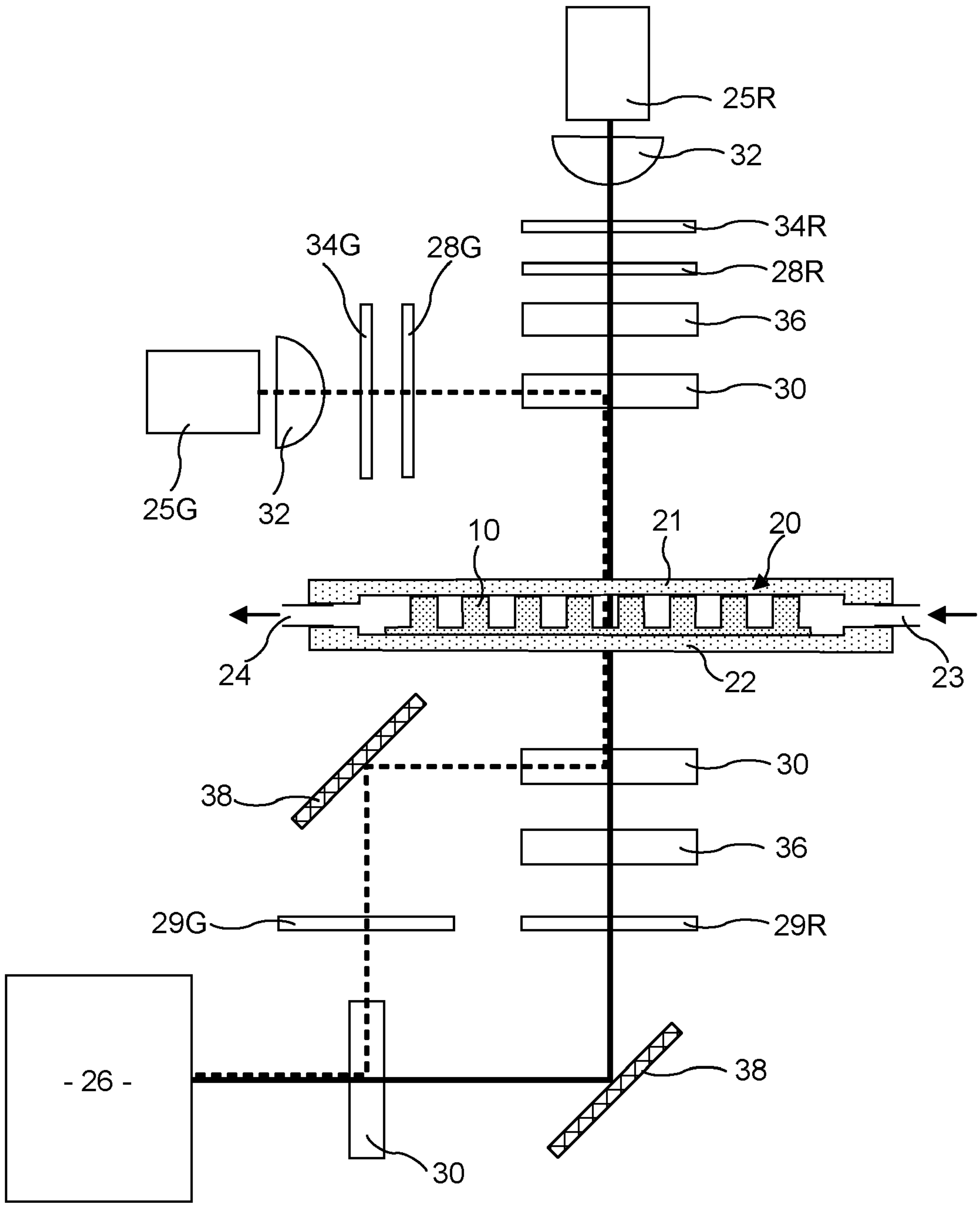
25R
32
34R
28R
36
30
34G
28G
25G
32
10
21
20
24
22
23
30
38
36
29G
29R
- 26 -
38
30

Fig 4

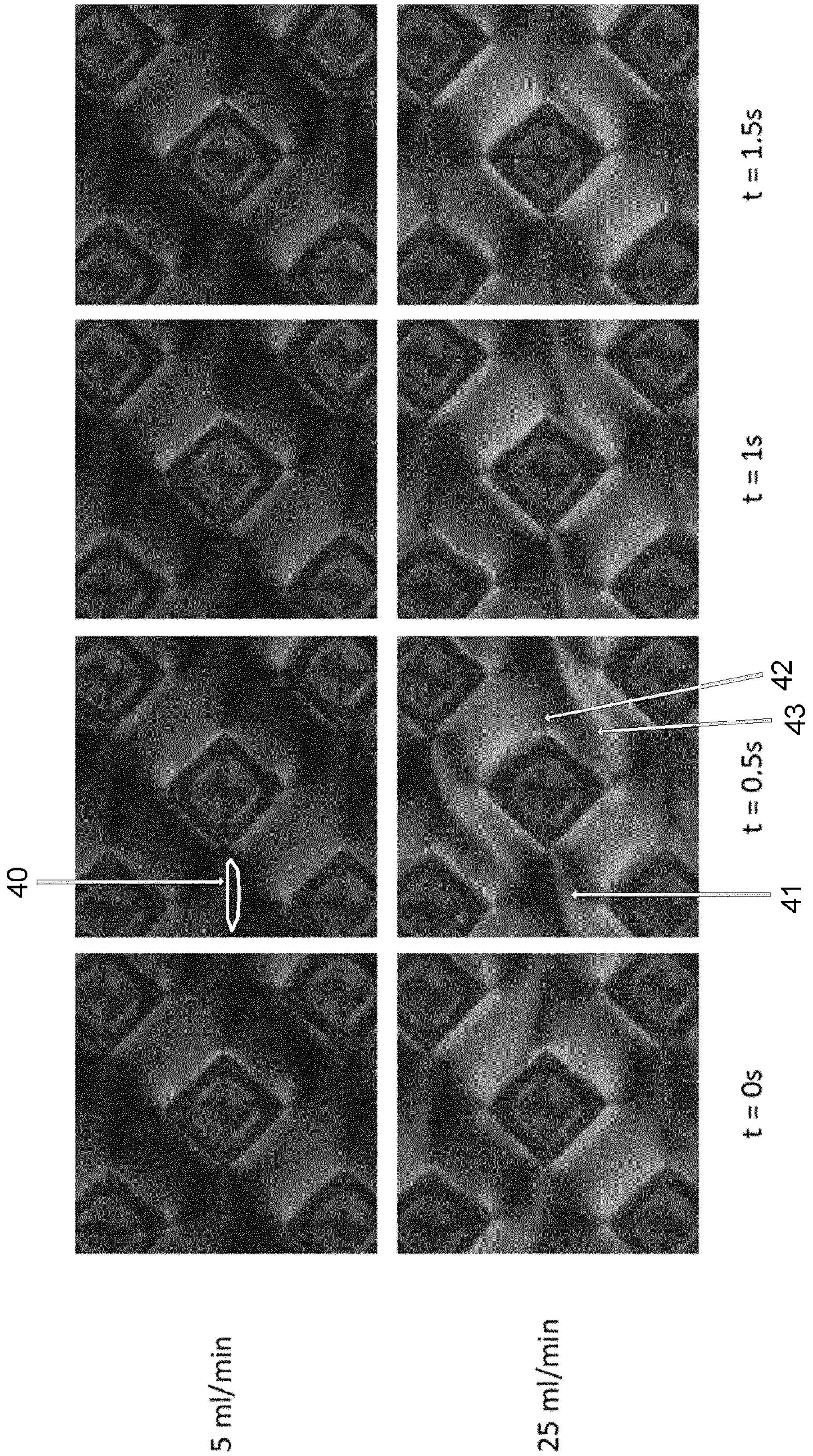


Fig 5

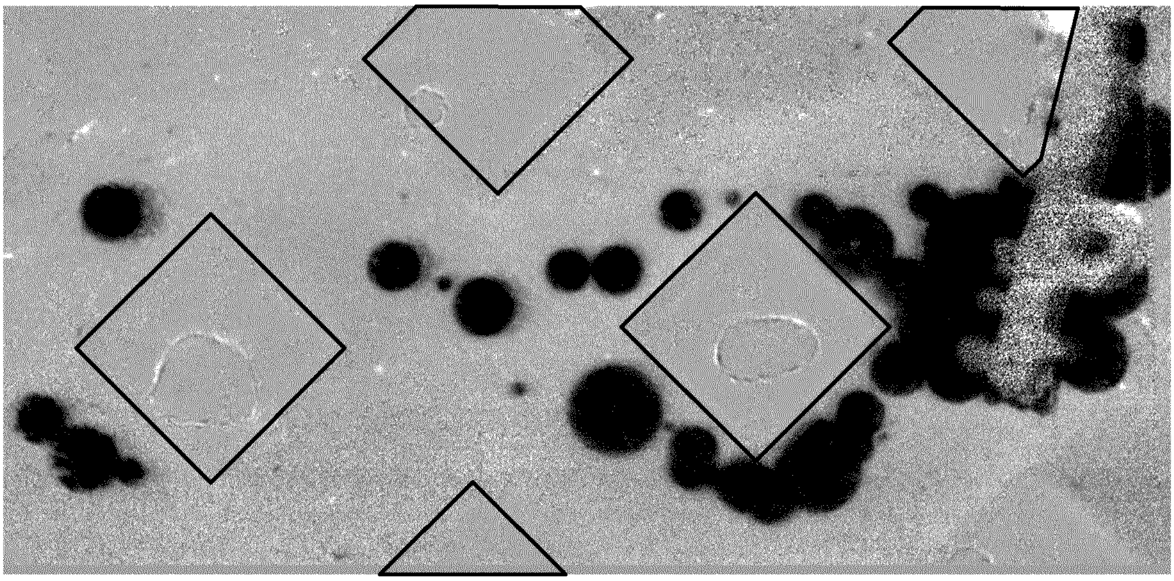

Fig 7A

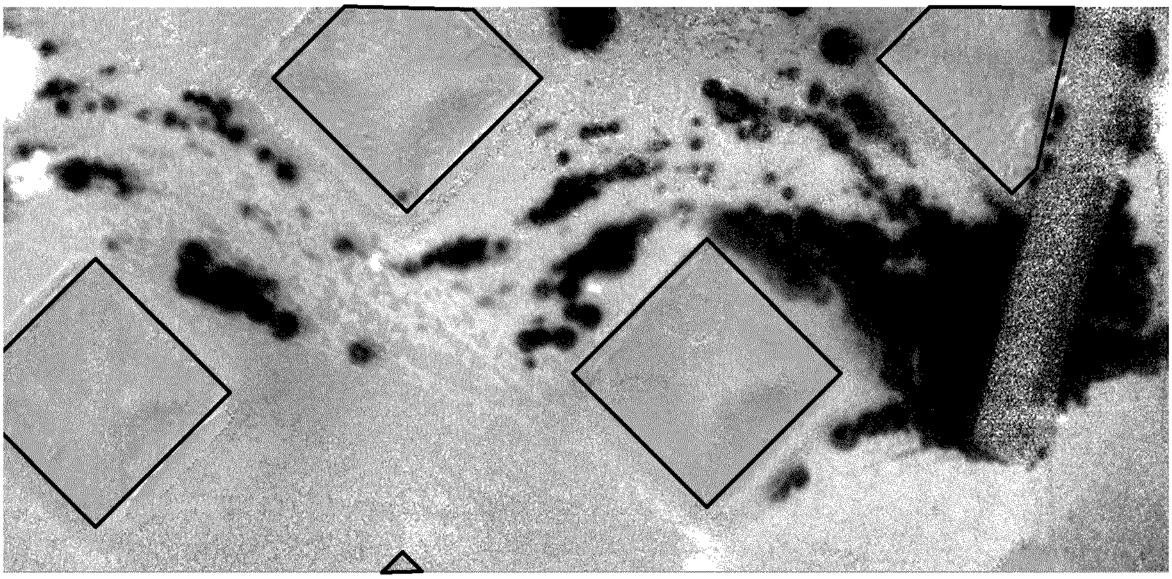

Fig 7B

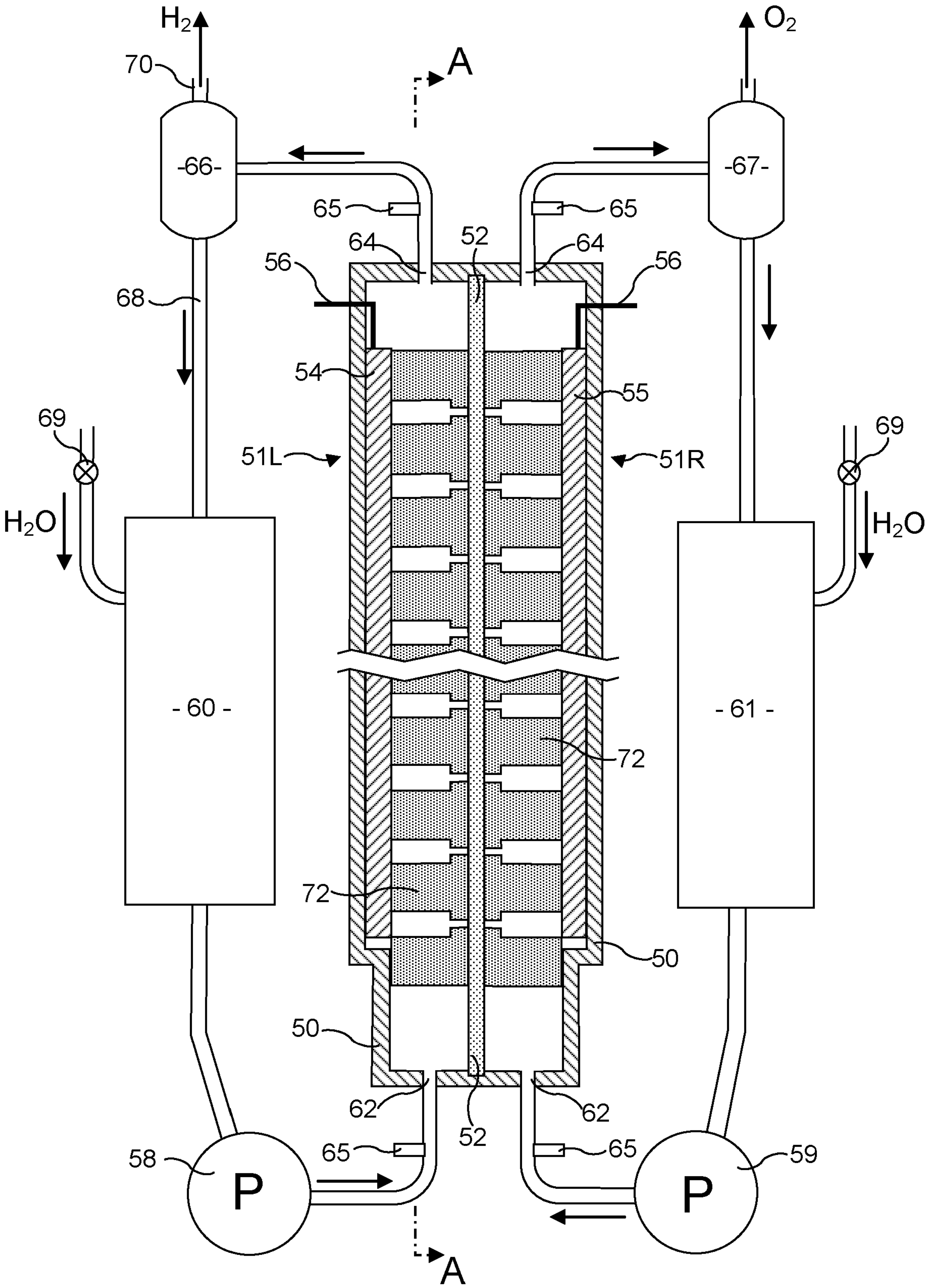
H2
O2
A
70
-66-
-67-
65
65
64
52
64
56
56
68
54
55
69
51L
51R
69
H2O
H2O
- 60 -
- 61 -
72
72
50
50
62
62
52
65
65
58
P
P
59
A

Fig 8

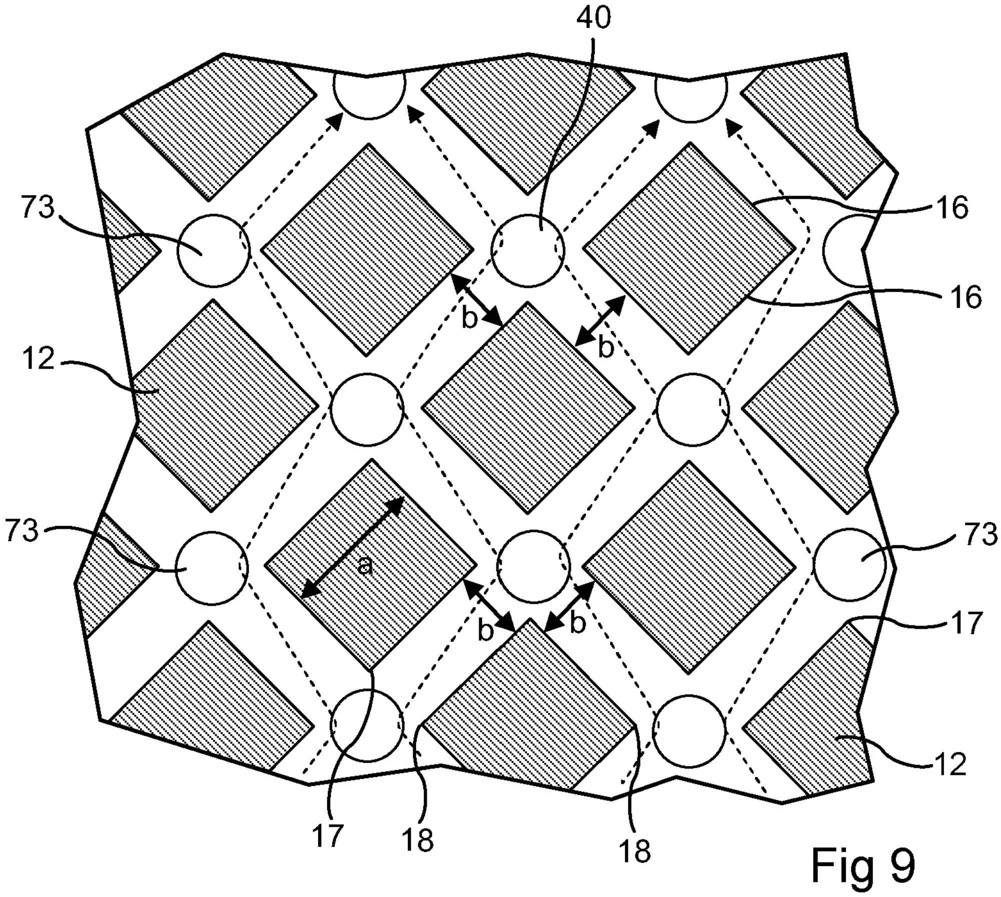


Fig 9

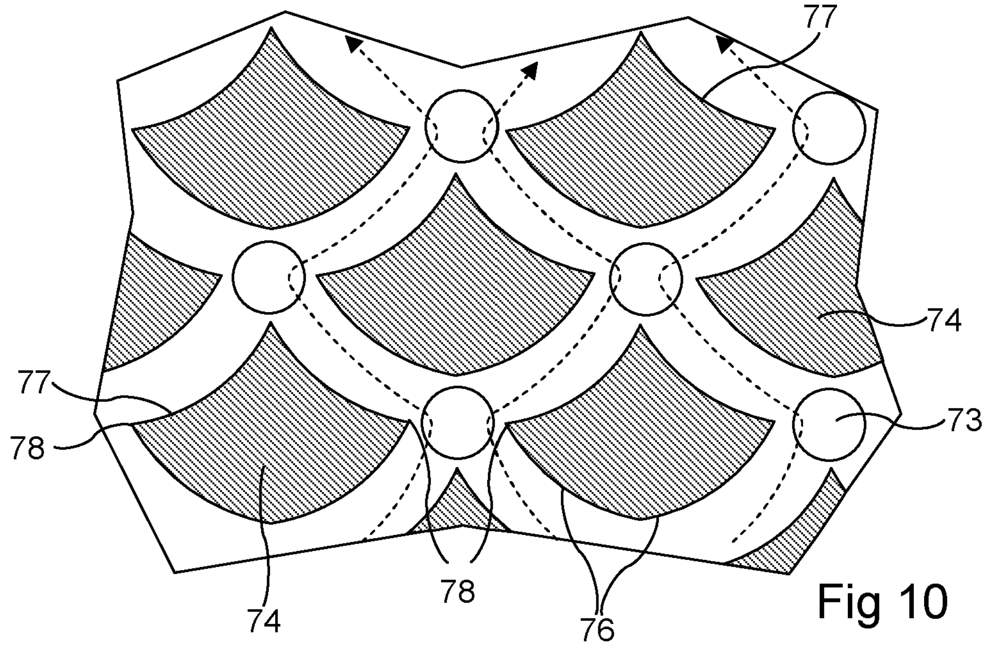


Fig 10

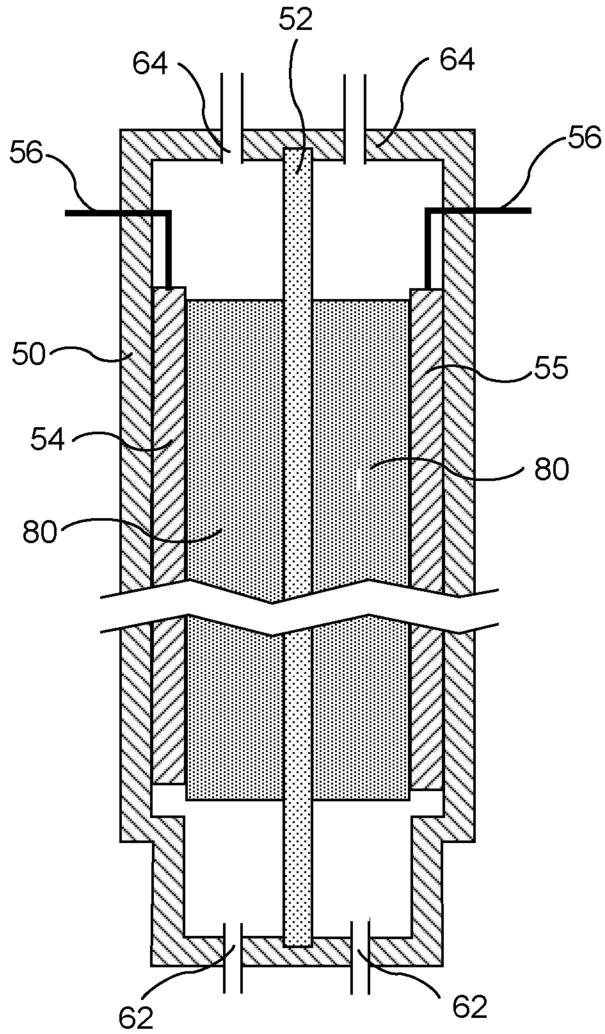
52
64
64
56
56
50
55
54
80
80
62
62

Fig 11

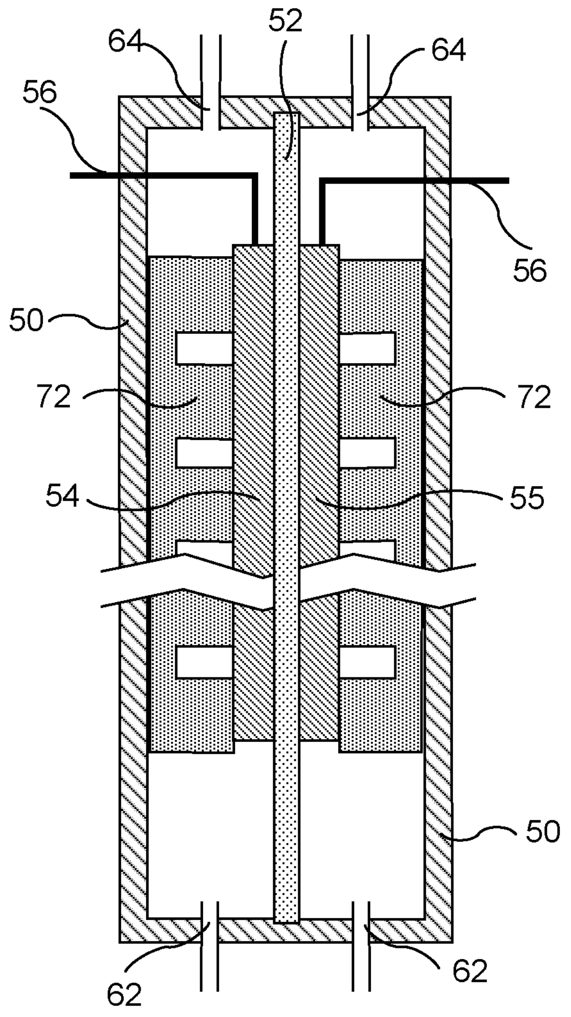
52
64
64
56
56
50
72
72
54
55
50
62
62

Fig 12

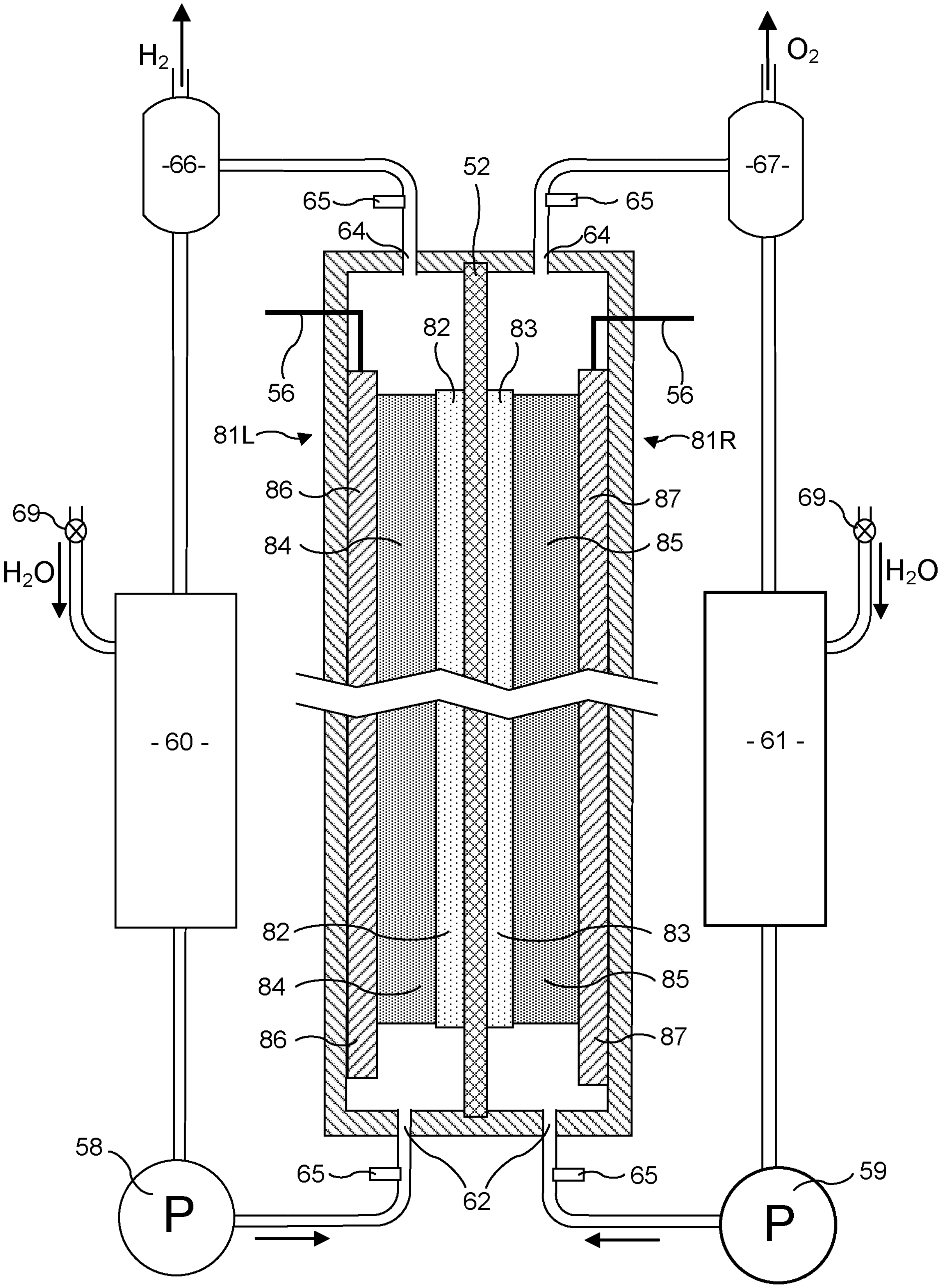
H2
O2
-66-
-67-
52
65
65
64
64
82
83
56
56
81L
81R
86
87
69
69
84
85
H2O
H2O
- 60 -
- 61 -
82
83
84
85
86
87
58
59
65
65
62
P
P

Fig 13

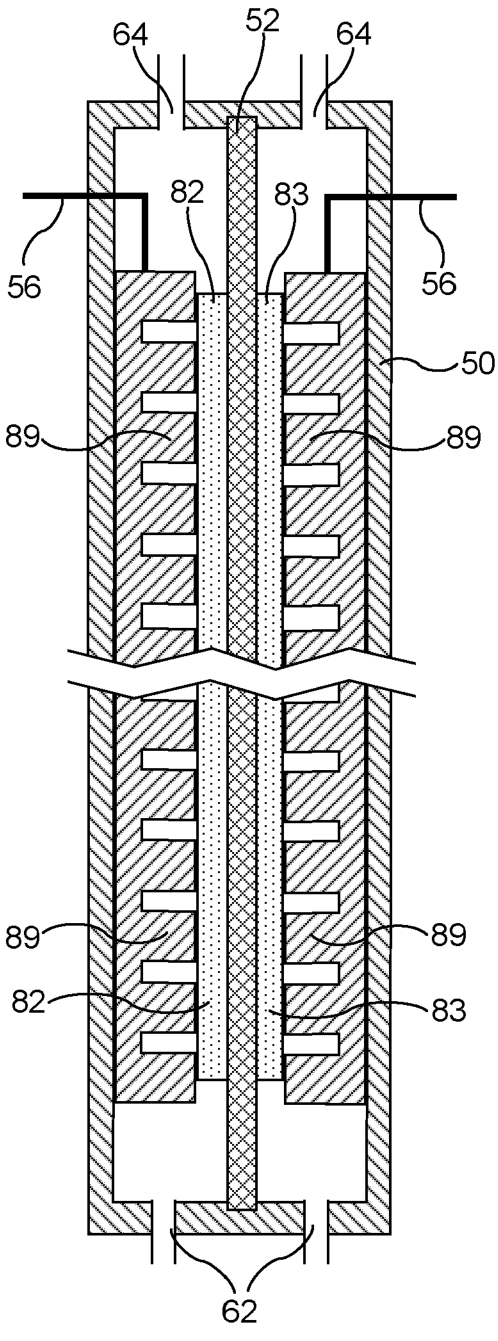
64
52
64
82
83
56
56
50
89
89
89
89
82
83
62

Fig 14

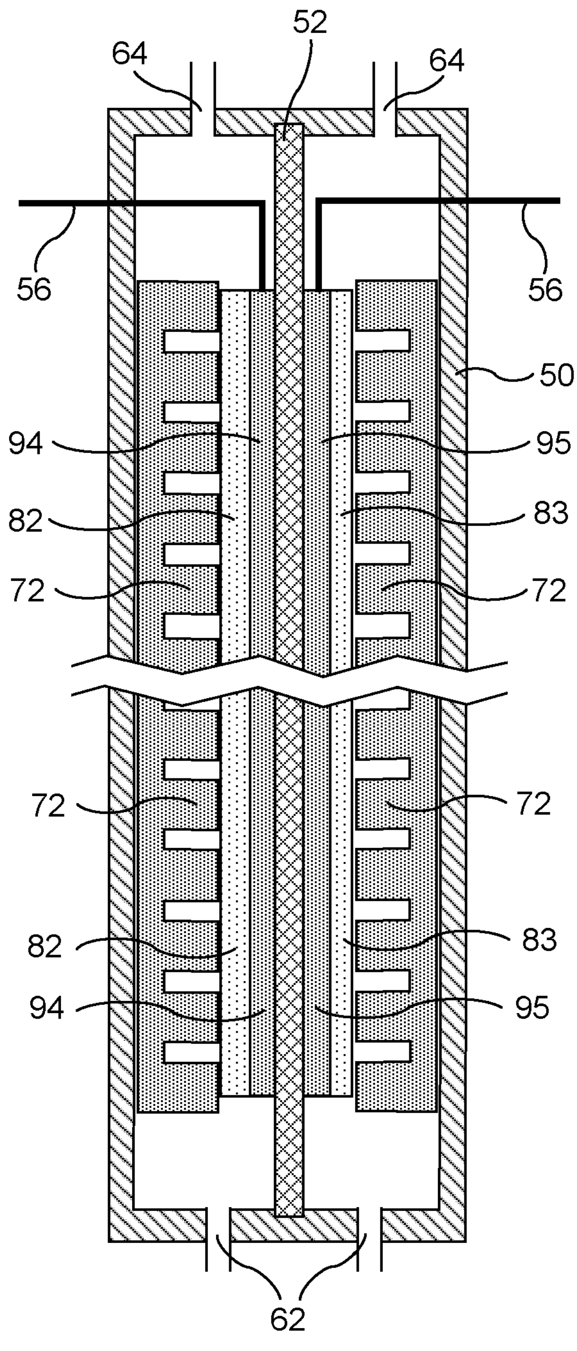
52
64
64
56
56
50
94
95
82
83
72
72
72
72
82
83
94
95
62

Fig 15

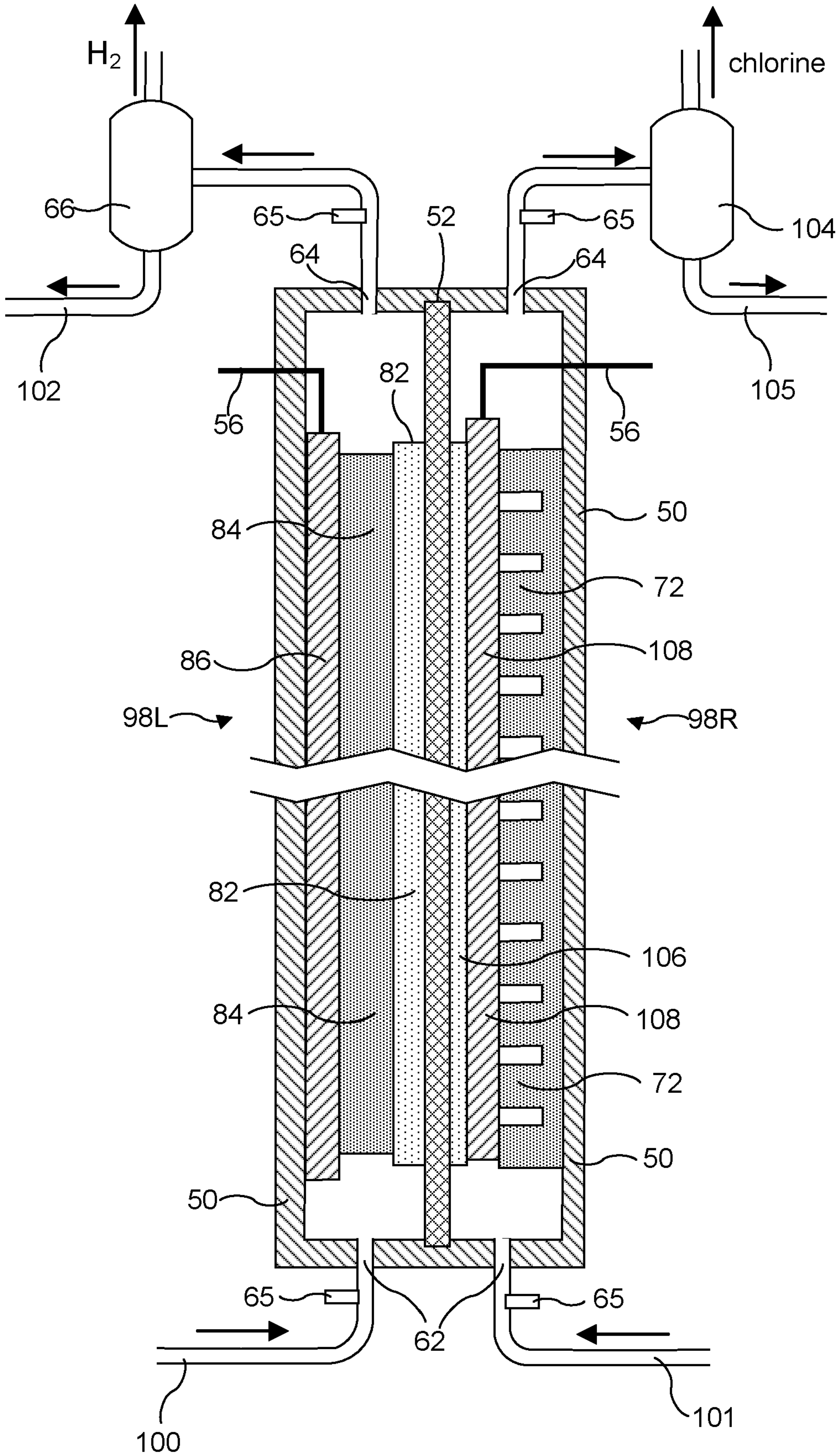
H2
chlorine
66
65
52
65
104
64
64
102
105
82
56
56
84
50
72
86
108
98L
98R
82
106
84
108
72
50
50
65
65
62
100
101

Fig 17

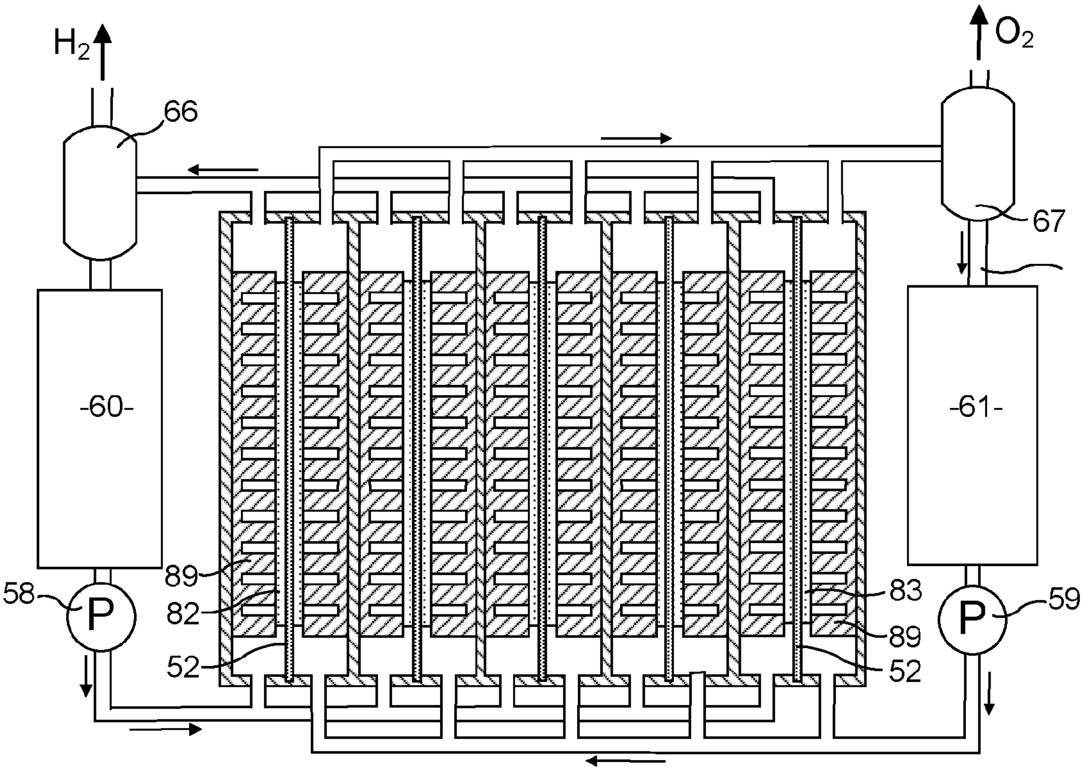
H2
O2
66
67
-60-
-61-
89
82
52
58
P
83
59
89
52

Fig 16

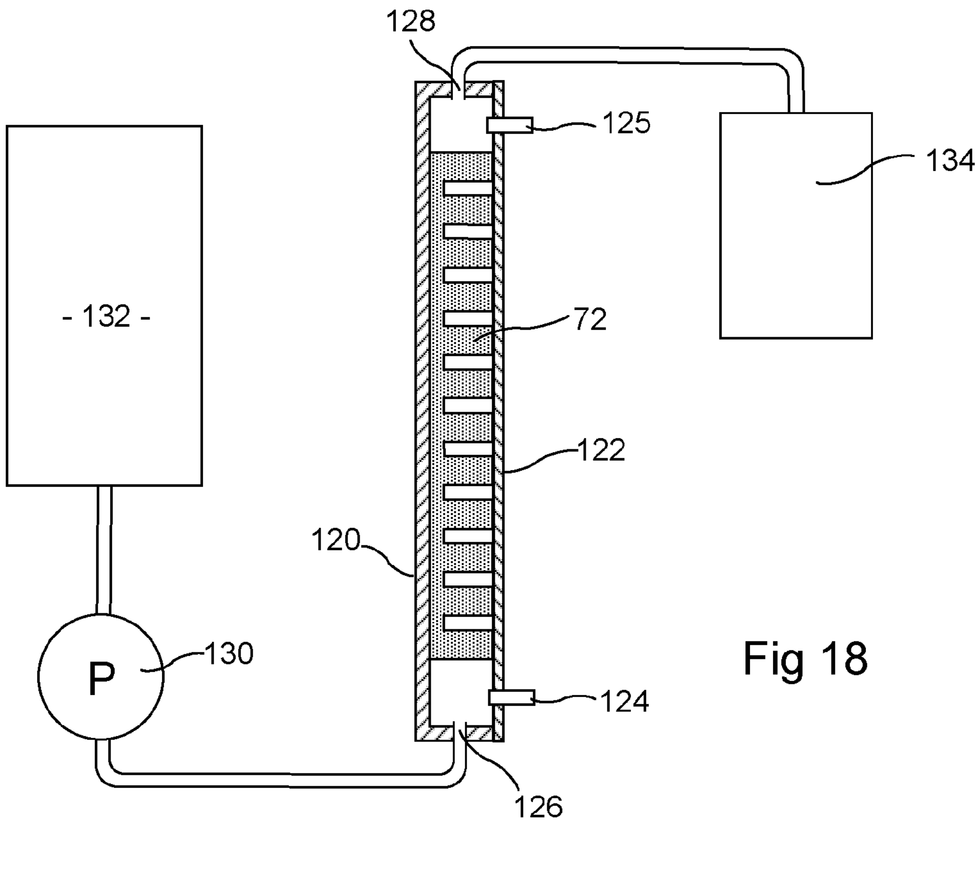
128
125
134
- 132 -
72
122
120
P
130
124
126

Fig 18

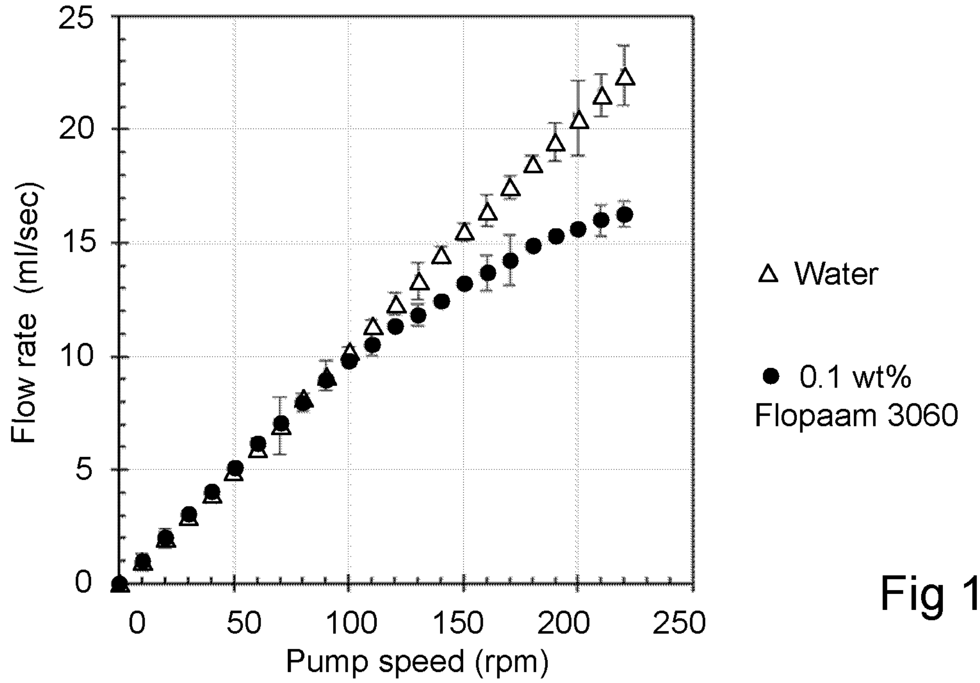

25
20
15
10
5
0
Flow rate (ml/sec)
0
50
100
150
200
250
Pump speed (rpm)
Water
0.1 wt% Flopaam 3060


Fig 19

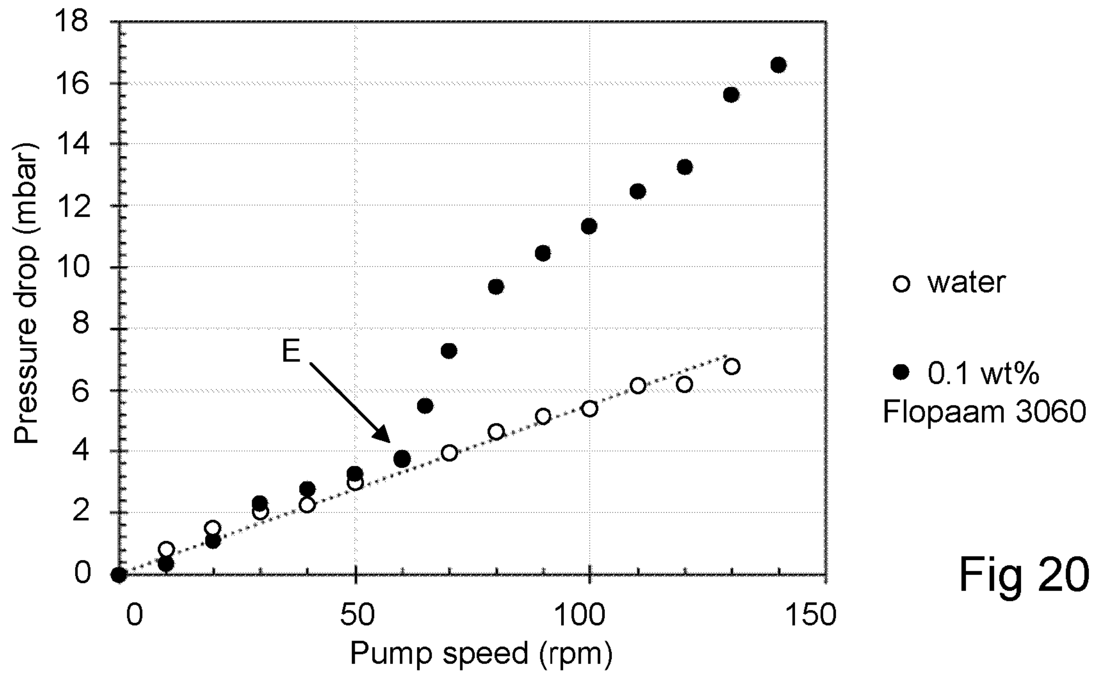

18
16
14
12
10
8
6
4
2
0
Pressure drop (mbar)
E
0
50
100
150
Pump speed (rpm)
water
0.1 wt% Flopaam 3060


Fig 20

Europäisches Patentamt
European Patent Office
Office européen des brevets

# EUROPEAN SEARCH REPORT

Application Number
EP 25 20 2172

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | WO 2025/059260 A1 (SCHLUMBERGER TECHNOLOGY CORP [US]; SCHLUMBERGER CA LTD [CA] ET AL.) 20 March 2025 (2025-03-20)<br>* paragraph [00010] - paragraph [0014]; claims 1-10; figures 1-16 *<br>* paragraph [0032] - paragraph [0086] *<br>----- | 1-5,9-15 | INV.<br>C25B1/04<br>C25B9/19<br>C25B9/60<br>C25B9/75<br>C25B9/77<br>C25B11/031<br>C25B11/051<br>C25B15/08 |
| X,P | WO 2025/128835 A1 (SCHLUMBERGER TECHNOLOGY CORP [US]; SCHLUMBERGER CA LTD [CA] ET AL.) 19 June 2025 (2025-06-19)<br>* paragraph [0003] - paragraph [0113]; claims 18-24; figures 1-26 *<br>----- | 1-5,9-15 | |
| X,P | WO 2025/059273 A1 (SCHLUMBERGER TECHNOLOGY CORP [US]; SCHLUMBERGER CA LTD [CA] ET AL.) 20 March 2025 (2025-03-20)<br>* paragraph [0006] - paragraph [0086]; claims 12-18; figures 1-16 *<br>----- | 1-5,9-15 | |
| X | US 2023/235465 A1 (GOETHEER EARL LAWRENCE VINCENT [BE] ET AL)<br>27 July 2023 (2023-07-27)<br>* abstract; table 1 *<br>* paragraph [0038] - paragraph [0077]; claims 1, 6, 11, 14-16; examples 1-8 *<br>----- | 1-8 | TECHNICAL FIELDS SEARCHED (IPC)<br>C25B<br>H01M |

The present search report has been drawn up for all claims

| Place of search | Date of completion of the search | Examiner |
|---|---|---|
| Munich | 2 February 2026 | Leu, Oana |

3

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 25 20 2172

This annex lists the patent family members relating to the patent documents cited in the above-mentioned European search report. The members are as contained in the European Patent Office EDP file on
The European Patent Office is in no way liable for these particulars which are merely given for the purpose of information.

02-02-2026

| Patent document cited in search report | Publication date | Patent family member(s) | Publication date |
|---|---|---|---|
| WO 2025059260 A1 | 20-03-2025 | GB 2633597 A | 19-03-2025 |
| | | US 2025096288 A1 | 20-03-2025 |
| | | WO 2025059260 A1 | 20-03-2025 |
| WO 2025128835 A1 | 19-06-2025 | GB 2636461 A | 18-06-2025 |
| | | US 2025198711 A1 | 19-06-2025 |
| | | WO 2025128835 A1 | 19-06-2025 |
| WO 2025059273 A1 | 20-03-2025 | GB 2633598 A | 19-03-2025 |
| | | US 2025092298 A1 | 20-03-2025 |
| | | WO 2025059273 A1 | 20-03-2025 |
| US 2023235465 A1 | 27-07-2023 | EP 3926075 A1 | 22-12-2021 |
| | | EP 4168608 A1 | 26-04-2023 |
| | | US 2023235465 A1 | 27-07-2023 |
| | | WO 2021256931 A1 | 23-12-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **SWEIGERS et al.** *Sustainable Energy and Fuels*, 2021, vol. 5, 1280
- **STEINBERG**. *Annual Review of Fluid Mechanics*, 2021, vol. 53, 27-58
- **RUBINSTEIN AND COLBY**. Polymer Physics. Oxford University Press, 2003
- **GROISMAN** ; **STEINBERG**. Elastic Turbulence in a polymer solution flow. *Nature*, 2000, vol. 45, 53
- **DRIS** ; **SHAQFEH**. *J. Non-Newtonian Fluid Mech*, 1998, vol. 80, 1-58
- **MAGDA** ; **LARSON**. *J. Non-Newtonian Fluid Mech.*, 1988, vol. 30, 1-19
- **DAVOODI et al.** *J. Fluid Mech.*, 2018, vol. 857, 823-850
- Chain Dimensions and Entanglement Spacings. **FETTERS** ; **LOHSE** ; **COLBY**. Physical Properties of Polymers Handbook. Springer, 2007, 447-454
- **YANG**. Viscoelastic wormlike micelles and their applications. *Current Opinion in Colloid & Interface Science*, 2002, vol. 7, 276-281
- **RAGHAVAN** ; **KALER**. Highly Viscoelastic Wormlike Micellar Solutions Formed by Cationic Surfactants with Long Unsaturated Tails. *Langmuir*, 2001, vol. 17, 300-306
- **BEAUMONT et al.** Turbulent flows in highly elastic wormlike micelles. *Soft Matter*, 2013, vol. 9, 735
- **FARDIN et al.** Elastic Turbulence in Shear Banding Wormlike Micelles. *Physical Review*, 2010, vol. 104, 178303
- **D.O. OLAGUNJU**. Instabilities and bifurcations of von Karman similarity solutions in swirling viscoelastic flow. *Z Angew Math Phys*, 1995, vol. 46, 224-238
- **E. TRAN** ; **A. CLARKE**. The relaxation time of entangled HPAM solutions in flow. *Journal of Non-Newtonian Fluid Mechanics*, 2023, vol. 311, 104954
- **MOSS GR** ; **ROTHSTEIN JP**. Flow of wormlike micelle solutions through a periodic array of cylinders. *Journal of Non-Newtonian Fluid Mechanics*, vol. 165 (2410), 1-13
- **QIN et al.** *Physical Review Liquids*, 2017, vol. 2, 083302
- **GROISMAN** ; **STEINBERG**. *New Journal of Physics*, 2009, vol. 6, 29
- **CHEN et al.** Key Components and Design Strategy for a Proton Exchange Membrane Water Electrolyzer. *Small Structures*, 2023, vol. 4, 2200130
- **NIBLETT et al.** Review of next generation hydrogen production from offshore wind using water electrolysis. *Journal of Power Sources*, 2024, vol. 592, 233904